# EUROPEAN PATENT APPLICATION

(11) **EP 4 462 836 A1**
(43) Date of publication of application: **13.11.2024**
(21) Application number: 22923601.3
(22) Date of filing: 23.12.2022
(51) Int. Cl.: H04W 8/24

(54) **COMMUNICATION METHOD AND APPARATUS**

(30) Priority: 30.01.2022 CN 202210114137
(71) Applicant: Huawei Technologies Co., Ltd., Shenzhen, Guangdong 518129 (CN)
(72) Inventor: ZHOU, Xiaoyun, Shenzhen, Guangdong 518129 (CN); ZONG, Zaifeng, Shenzhen, Guangdong 518129 (CN); LIAO, Ting, Shenzhen, Guangdong 518129 (CN); ZHENG, Xiaochun, Shenzhen, Guangdong 518129 (CN)
(74) Representative: Pfenning, Meinig & Partner mbB
(86) International application number: PCT/CN2022/141395
(87) International publication number: WO 2023/142815

(57) **Abstract**

Embodiments of this application provide a communication method and apparatus. The method includes: An access network device receives a first request message used to request to execute a first operation on target terminals, where the first request message includes identification information of the target terminals and indication information of the first operation. The access network device sends, to the target terminals, a first query request used to obtain the identification information of the target terminals, and receives first identification information from a first target terminal of the target terminals. The access network device sends an operation request message corresponding to the indication information of the first operation to the first target terminal, and receives a first execution result from the first target terminal. The access network device having a card reader function executes an operation on a terminal. This avoids cases small scope and scale of applicable scenarios caused by a short communication distance between a card reader and the terminal.

## Description

This application claims priority to Chinese Patent Application No. 202210114137.4, filed with the China National Intellectual Property Administration on January 30, 2022 and entitled "COMMUNICATION METHOD AND APPARATUS", which is incorporated herein by reference in its entirety.

### TECHNICAL FIELD

Embodiments of this application relate to the communication field, and more specifically, to a communication method and apparatus.

### BACKGROUND

There are large-scale deployment and application scenarios in passive internet of things (passive internet of things, passive IoT), including but not limited to:
(1) Logistics and warehousing: including goods inventory and tracking, and transportation process environment and goods status monitoring for high-value goods (such as vaccines); and
(2) Industrial manufacturing: including environment and device status monitoring.

The passive IoT has a simple function and sends information only under external excitation, where the excitation is generally from a card reader. For current deployment of the card reader, there is a short communication distance between the card reader and a terminal, it is difficult in management, and the like. As a result, the scope and scale of scenarios to which operations on passive IoT terminals are applicable are small, and how to implement operations on passive IoT terminals in a large-scale and large-coverage environment becomes an urgent problem to be resolved.

### SUMMARY

Embodiments of this application provide a communication method, to implement an operation on a terminal.

According to a first aspect, a communication method is provided. The method may be performed by an access network device, or may be performed by a chip, a chip system, or a circuit in an access network device. This is not limited in this application. For ease of description, an example in which the method is performed by an access network device is used for description below.

The method includes:
An access network device receives a first request message, where the first request message is used to request to execute a first operation on target terminals, and the first request message includes identification information of the target terminals and indication information of the first operation; the access network device sends a first query request to the target terminals based on the first request message, where the first query request is used to obtain the identification information of the target terminals; the access network device receives first identification information from a first target terminal, where the first target terminal is one of the target terminals; the access network device sends an operation request message to the first target terminal, where the operation request message is used to request the first target terminal to execute the first operation; and the access network device receives a first execution result from the first target terminal, where the first execution result is an execution result of executing the first operation.

Based on the foregoing technical solution, the access network device may execute inventory (for example, send a query request and an operation request) on the target terminals based on the first request message, so that the access network device performs inventory on the terminals. Compared with an ordinary card reader, an access network device having a card reader function can cover terminals in a large area, to implement inventory of terminals in a large-scale and large-coverage environment.

With reference to the first aspect, in some implementations of the first aspect, the first request message further includes an operation parameter corresponding to the first operation, and the operation request message further includes the operation parameter.

Based on the foregoing technical solution, the first request message received by the access network device may further include the operation parameter corresponding to the first operation, so that the operation request message delivered by the access network device may include the operation parameter corresponding to the first operation. Therefore, the target terminals that receive the operation request can clearly determine how to execute an operation, thereby avoiding an operation mistake.

With reference to the first aspect, in some implementations of the first aspect, after that the access network device receives a first execution result from the first target terminal, the method further includes: The access network device sends a first message to a mobility management function network element, where the first message includes the first identification information and the first execution result. Alternatively, the access network device receives an address of a first receiving network element, where the address is an address used by the first receiving network element to receive information; and the access network device sends a first message to the first receiving network element based on the address, where the first message includes the first identification information and the first execution result. Alternatively, the access network device receives first tunnel information, where the first tunnel information indicates a user plane port used by a second receiving network element to receive information; and the access network device sends a first message to the second receiving network element based on the first tunnel information, where the first message includes the first identification information and the first execution result.

Based on the foregoing technical solution, after completing inventory on a target terminal, the access network device may report an inventory result (for example, the first identification information and the first execution result) of the target terminal. In addition, there may be a plurality of reporting manners (for example, reporting by using the mobility management function network element, directly reporting to the first receiving network element, or reporting through a tunnel). This improves flexibility of the solution.

With reference to the first aspect, in some implementations of the first aspect, the method further includes: The access network device sends a second query request to the target terminals, where the second query request is used to obtain the identification information of the target terminals; the access network device receives second identification information from a second target terminal, where the second target terminal is one of the target terminals other than the first target terminal; the access network device sends the operation request message to the first target terminal; and the access network device receives a second execution result from the second target terminal, where the second execution result is an execution result of executing the first operation.

Based on the foregoing technical solution, the access network device may complete, based on the first request message, inventory on a plurality of target terminals covered by the access network device.

With reference to the first aspect, in some implementations of the first aspect, after that the access network device receives a second execution result from the second target terminal, the method further includes: The access network device sends a second message to the mobility management function network element, where the second message includes the first identification information, the first execution result, the second identification information, and the second execution result. Alternatively, the access network device receives the address of the first receiving network element, where the address is an address used by the first receiving network element to receive information; and the access network device sends a second message to the first receiving network element based on the address, where the second message includes the first identification information, the first execution result, the second identification information, and the second execution result. Alternatively, the access network device receives the first tunnel information, where the first tunnel information indicates the user plane port used by the second receiving network element to receive information; and the access network device sends a second message to the second receiving network element based on the first tunnel information, where the second message includes the first identification information, the first execution result, the second identification information, and the second execution result.

Based on the foregoing technical solution, after completing inventory on a plurality of target terminals, the access network device may report inventory results of the plurality of target terminals. In addition, there may be a plurality of reporting manners. This improves flexibility of the solution.

With reference to the first aspect, in some implementations of the first aspect, the first receiving network element includes a capability exposure network element or a terminal management function network element. The second receiving network element includes a user plane function network element or a terminal management user plane function network element.

With reference to the first aspect, in some implementations of the first aspect, before that the access network device receives the first tunnel information, the method further includes: The access network device sends a second request message to the mobility management function network element, where the second request message is used to request to obtain the first tunnel information.

Based on the foregoing technical solution, the first tunnel information may be delivered due to a request of the access network device, and the access network device is granted initiative.

With reference to the first aspect, in some implementations of the first aspect, the method further includes: The access network device receives a first association identifier, where the first association identifier is used to associate the first request message with the first message or is used to associate the first request message with the second message, and the first message and/or the second message include/includes the first association identifier.

Based on the foregoing technical solution, an association between a response and a request is added, so that when a plurality of inventory requests are received, it is ensured that no error occurs in the response based on the association identifier.

With reference to the first aspect, in some implementations of the first aspect, the first request message further includes at least one of the following information: first indication information, operation interval duration indication information, operation start moment indication information, and operation timeout moment indication information. The first indication information indicates an area in which the access network device sends the query request to the target terminals. The operation interval duration indication information indicates duration of an interval between two adjacent operations. The operation start moment indication information indicates a start moment of the 1^{st} operation. The operation timeout moment indication information indicates an end moment of the last operation.

Based on the foregoing technical solution, an inventory request message may include different information, to provide more information related to inventory, and improve inventory performance.

With reference to the first aspect, in some implementations of the first aspect, when the first request message includes the operation interval duration indication information, after one operation executed by the access network device on the target terminals ends, the method further includes: The access network device executes another operation on the target terminals, where an interval between a start moment of the another operation and an end moment of the operation is the duration.

With reference to the first aspect, in some implementations of the first aspect, the identification information of the target terminals includes at least one of the following information: indication information of any one of the target terminals, a value interval to which identifiers of the target terminals belong, an identifier list of the target terminals, a group identifier of a terminal group to which the target terminals belong, identification information of a user to which the target terminals belong, or identification information of an application to which the target terminals belong.

Based on the foregoing technical solution, the identification information of the target terminals may have a plurality of different forms. This improves flexibility of the solution.

With reference to the first aspect, in some implementations of the first aspect, the first operation includes at least one of the following operations: query a terminal identifier, read, write, kill, lock, blockwrite, blockerase, access, encrypt, or decrypt.

With reference to the first aspect, in some implementations of the first aspect, the method further includes: The access network device sends first information, where the first information indicates that the operation executed on the target terminal ends.

According to a second aspect, a communication method is provided. The method may be performed by a terminal management control plane function network element, or may be performed by a chip, a chip system, or a circuit in a terminal management control plane function network element. This is not limited in this application. For ease of description, an example in which the method is performed by a terminal management control plane function network element is used for description below.

The method includes:
A terminal management control plane function network element receives a third request message from an application function network element of an application, where the third request message is used to request to execute a first operation on target terminals, and the third request message includes information about the application, identification information of the target terminals, and indication information of the first operation; and the terminal management control plane function network element sends a first request message to an access network device, where the first request message is used to request to execute the first operation on the target terminals, and the first request message includes the identification information of the target terminals and the indication information of the first operation.

Based on the foregoing technical solution, the access network device may be triggered, by using the first request message, to perform inventory on the target terminals, so that the access network device performs inventory on the terminals. Compared with an ordinary card reader, an access network device having a card reader function can cover terminals in a large area, to implement inventory of terminals in a large-scale and large-coverage environment.

With reference to the second aspect, in some implementations of the second aspect, before that the terminal management control plane function network element sends a first request message to an access network device, the method further includes: A tag management control plane function network element determines a terminal management user plane function network element based on the information about the application; the terminal management control plane function network element sends a fourth request message to the terminal management user plane function network element, where the fourth request message is used to request to obtain first tunnel information, and the first tunnel information indicates first tunnel information used by the terminal management user plane function network element to receive data; and the terminal management control plane function network element receives the first tunnel information from the terminal management user plane function network element.

Based on the foregoing technical solution, the tag management control plane function network element may obtain the first tunnel information from the terminal management user plane function network element, to transmit data through a tunnel.

With reference to the second aspect, in some implementations of the second aspect, before that the terminal management control plane function network element sends a first request message to an access network device, the method further includes: A tag management control plane function network element determines a terminal management user plane function network element based on the information about the application; the terminal management control plane function network element determines first tunnel information, where the first tunnel information indicates first tunnel information used by the terminal management user plane function network element to receive data; and the terminal management control plane function network element sends the first tunnel information to the terminal management user plane function network element.

Based on the foregoing technical solution, the tag management control plane function network element may automatically determine the first tunnel information, to transmit data through a tunnel.

With reference to the second aspect, in some implementations of the second aspect, the first request message further includes the first tunnel information.

Based on the foregoing technical solution, the tag management control plane function network element may send the first tunnel information to the access network device, so that the access network device can report an inventory result through a tunnel.

With reference to the second aspect, in some implementations of the second aspect, the first request message further includes an address used by the terminal management control plane function network element to receive a notification message.

Based on the foregoing technical solution, the tag management control plane function network element may send, to the access network device, the address used by the tag management control plane function network element to receive the notification message. This avoids a data transmission error.

With reference to the second aspect, in some implementations of the second aspect, the third request message further includes second tunnel information used by a server of the application to receive data. Alternatively, the terminal management control plane function network element determines second tunnel information based on the information about the application. The second tunnel information is a user plane port used by the server of the application to receive data.

With reference to the second aspect, in some implementations of the second aspect, the method further includes: The terminal management control plane function network element sends the second tunnel information to the terminal management user plane function network element.

With reference to the second aspect, in some implementations of the second aspect, the method further includes: The terminal management control plane function network element receives a first message from the access network device, where the first message includes first identification information of a first target terminal of the target terminals and a first execution result corresponding to the first target terminal; and the terminal management control plane function network element sends the first message to the terminal management user plane function network element.

Alternatively, the terminal management control plane function network element receives a second message from the access network device, where the second message includes first identification information of a first target terminal of the target terminals, a first execution result corresponding to the first target terminal, second identification information of a second target terminal, and a second execution result corresponding to the second target terminal; and the terminal management control plane function network element sends the second message to the terminal management user plane function network element.

Based on the foregoing technical solution, the access network device may report an inventory result in different manners. This improves flexibility of the solution.

With reference to the second aspect, in some implementations of the second aspect, the third request message further includes at least one of the following information: second indication information, an operation parameter corresponding to the first operation, operation interval duration indication information, operation start moment indication information, and operation timeout moment indication information. The second indication information indicates an area in which the first operation is to be executed. The operation interval duration indication information indicates duration of an interval between two adjacent operations. The operation start moment indication information indicates a start moment of the 1^{st} operation. The operation timeout moment indication information indicates an end moment of the last operation.

The first request message further includes at least one of the following information: first indication information, the operation parameter corresponding to the first operation, the operation interval duration indication information, the operation start moment indication information, and the operation timeout moment indication information. The first indication information indicates an area in which the access network device sends a query request to the target terminals.

Based on the foregoing technical solution, an inventory request message may include different information, to provide more information related to inventory, and improve inventory performance.

With reference to the second aspect, in some implementations of the second aspect, the method further includes: the terminal management control plane function network element receives first information from the access network device, where the first information is used to indicate that one operation executed on the target terminals ends; and the terminal management control plane function network element triggers release of the first tunnel information based on the first information.

With reference to the second aspect, in some implementations of the second aspect, the information about the application includes an identifier of the application or a data network access identifier of the application.

Based on the foregoing technical solution, the information about the application may have a plurality of different forms. This improves flexibility of the solution.

According to a third aspect, a communication method is provided. The method may be performed by a communication system including the access network device in the first aspect and the terminal management control plane function network element in the second aspect.

The method includes:
An application function network element of an application sends a third request message to a terminal management function network element, where the third request message is used to request to execute a first operation on target terminals, and the third request message includes information about the application, identification information of the target terminals, and indication information of the first operation;
the terminal management function network element sends a first request message to an access network device, where the first request message is used to request to execute the first operation on the target terminals, and the first request message includes the identification information of the target terminals and the indication information of the first operation;
the access network device sends a query request message and an operation request message to the target terminals, where the query request is used to obtain the identification information of the target terminals, and the operation request message is used to request the target terminals to execute the first operation;
the access network device receives identification information of one or more terminals of the target terminals and an execution result of performing the first operation by the one or more terminals of the target terminals;
the access network device sends the identification information of one or more terminals of the target terminals and the execution result of performing the first operation by the one or more terminals of the target terminals to the terminal management function network element; and
the terminal management function network element sends the identification information of the one or more terminals of the target terminals and the execution result of performing the first operation by the one or more terminals of the target terminals to the application.

Based on the foregoing technical solution, the access network device may execute inventory (for example, send a query request and an operation request) on the target terminals based on the first request message, so that the access network device performs inventory on the terminals. Compared with an ordinary card reader, an access network device having a card reader function can cover terminals in a large area, to implement inventory of terminals in a large-scale and large-coverage environment.

With reference to the third aspect, in some implementations of the third aspect, the terminal management function network element includes a terminal management control plane function network element and a terminal management user plane function network element. That an application function network element of an application sends a third request message to a terminal management function network element includes: The application function network element of the application sends the third request message to the terminal management control plane function network element. The method further includes: The terminal management control plane function network element determines the terminal management user plane function network element based on the information about the application. That the terminal management function network element sends a first request message to an access network device includes: The terminal management control plane function network element sends the first request message to the access network device.

With reference to the third aspect, in some implementations of the third aspect, before that the terminal management control plane function network element sends the first request message to the access network device, the method further includes:
A tag management control plane function network element determines the terminal management user plane function network element based on the information about the application; the terminal management control plane function network element sends a fourth request message to the terminal management user plane function network element, where the fourth request message is used to request to obtain first tunnel information, and the first tunnel information indicates first tunnel information used by the terminal management user plane function network element to receive data; and the terminal management control plane function network element receives the first tunnel information from the terminal management user plane function network element. The first request message further includes the first tunnel information.

With reference to the third aspect, in some implementations of the third aspect, before that the terminal management control plane function network element sends the first request message to the access network device, the method further includes:

The tag management control plane function network element determines the terminal management user plane function network element based on the information about the application; the terminal management control plane function network element determines the first tunnel information, where the first tunnel information indicates first tunnel information used by the terminal management user plane function network element to receive data; and the terminal management control plane function network element sends the first tunnel information to the terminal management user plane function network element. The first request message further includes the first tunnel information.

With reference to the third aspect, in some implementations of the third aspect, the first request message further includes an address used by the terminal management control plane function network element to receive a notification message.

With reference to the third aspect, in some implementations of the third aspect, the third request message further includes second tunnel information used by a server of the application to receive data. Alternatively, the terminal management control plane function network element determines second tunnel information based on the information about the application, where the second tunnel information is a user plane port used by a server of the application to receive data.

With reference to the third aspect, in some implementations of the third aspect, the method further includes: The terminal management control plane function network element sends the second tunnel information to the terminal management user plane function network element.

With reference to the third aspect, in some implementations of the third aspect, the method further includes: The terminal management control plane function network element receives a first message from the access network device, where the first message includes first identification information of a first target terminal of the target terminals and a first execution result corresponding to the first target terminal; and the terminal management control plane function network element sends the first message to the terminal management user plane function network element.

Alternatively, the terminal management control plane function network element receives a second message from the access network device, where the second message includes first identification information of a first target terminal of the target terminals, a first execution result corresponding to the first target terminal, second identification information of a second target terminal, and a second execution result corresponding to the second target terminal; and the terminal management control plane function network element sends the second message to the terminal management user plane function network element.

With reference to the third aspect, in some implementations of the third aspect, the terminal management user plane function network element receives the first message from the access network device, where the first message includes the first identification information of the first target terminal of the target terminals and the first execution result corresponding to the first target terminal.

Alternatively, the terminal management user plane function network element receives the second message from the access network device, where the second message includes the first identification information of the first target terminal of the target terminals, the first execution result corresponding to the first target terminal, the second identification information of the second target terminal, and the second execution result corresponding to the second target terminal.

With reference to the third aspect, in some implementations of the third aspect, the terminal management user plane function network element sends first data to an application server of the application based on the second tunnel information.

With reference to the third aspect, in some implementations of the third aspect, the information about the application includes an identifier of the application or a data network access identifier of the application.

According to a fourth aspect, a communication apparatus is provided. The communication apparatus includes a processor, configured to implement functions of the access network device in the method described in the first aspect.

Optionally, the communication apparatus may further include a memory. The memory is coupled to the processor. The processor is configured to implement the functions of the access network device in the method described in the first aspect.

In a possible implementation, the memory is configured to store program instructions and data. The memory is coupled to the processor. The processor may invoke and execute the program instructions stored in the memory, to implement the functions of the access network device in the method described in the first aspect.

Optionally, the communication apparatus may further include a communication interface. The communication interface is used by the communication apparatus to communicate with another device. When the communication apparatus is an access network device, the communication interface is a transceiver, an input/output interface, a circuit, or the like.

In a possible design, the communication apparatus includes a processor and a communication interface, configured to implement functions of the access network device in the method described in the first aspect. Details are as follows:
The processor communicates with the outside through the communication interface; and
the processor is configured to run a computer program, to enable the apparatus to implement any method described in the first aspect.

It may be understood that the outside may be an object other than the processor or an object other than the apparatus.

In another possible design, the communication apparatus is a chip or a chip system. The communication interface may be an input/output interface, an interface circuit, an output circuit, an input circuit, a pin, a related circuit, or the like on the chip or the chip system. The processor may alternatively be implemented as a processing circuit or a logic circuit.

According to a fifth aspect, a communication apparatus is provided. The communication apparatus includes a processor, configured to implement functions of the terminal management control plane function network element in the method described in the second aspect.

Optionally, the communication apparatus may further include a memory. The memory is coupled to the processor. The processor is configured to implement the functions of the terminal management control plane function network element in the method described in the second aspect.

In a possible implementation, the memory is configured to store program instructions and data. The memory is coupled to the processor. The processor may invoke and execute the program instructions stored in the memory, to implement the functions of the terminal management control plane function network element in the method described in the second aspect.

Optionally, the communication apparatus may further include a communication interface. The communication interface is used by the communication apparatus to communicate with another device. When the communication apparatus is a terminal management control plane function network element, the transceiver may be a communication interface or an input/output interface.

In a possible design, the communication apparatus includes a processor and a communication interface, configured to implement functions of the terminal management control plane function network element in the method described in the second aspect. Details are as follows:

The processor communicates with the outside through the communication interface; and
the processor is configured to run a computer program, to enable the apparatus to implement any method described in the second aspect.

It may be understood that the outside may be an object other than the processor or an object other than the apparatus.

In another implementation, when the communication apparatus is a chip or a chip system, the communication interface may be an input/output interface, an interface circuit, an output circuit, an input circuit, a pin, a related circuit, or the like on the chip or the chip system. The processor may alternatively be implemented as a processing circuit or a logic circuit.

According to a sixth aspect, a computer-readable storage medium is provided. The computer-readable storage medium stores a computer program. When the computer program is executed by a communication apparatus, the communication apparatus is enabled to implement the method in any one of the possible implementations of the first aspect and the second aspect.

According to a seventh aspect, a computer program product including instructions is provided. When the instructions are executed by a computer, a communication apparatus is enabled to implement the method in any one of the possible implementations of the first aspect and the second aspect.

According to an eighth aspect, a communication system is provided. The communication system includes the communication apparatus shown in the fourth aspect and the communication apparatus shown in the fifth aspect.

### BRIEF DESCRIPTION OF DRAWINGS

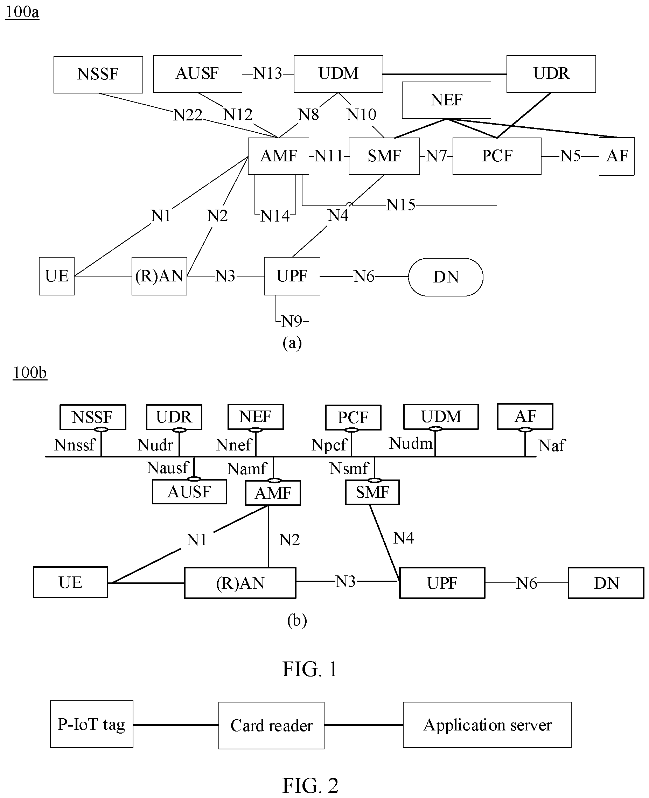

(a) and (b) in FIG. 1 are schematic diagrams of application scenarios applicable to embodiments of this application;
FIG. 2 is a schematic diagram of a passive IoT tag management manner;
FIG. 3A and FIG. 3B are a schematic flowchart of a communication method according to an embodiment of this application;
FIG. 4A and FIG. 4B are a schematic flowchart of another communication method according to an embodiment of this application;
(a) to (d) in FIG. 5 are schematic diagrams of network architectures according to an embodiment of this application;
FIG. 6A and FIG. 6B are a schematic flowchart of still another communication method according to an embodiment of this application;
FIG. 7A and FIG. 7B are a schematic flowchart of still another communication method according to an embodiment of this application;
(a) to (d) in FIG. 8 are schematic diagrams of network architectures according to an embodiment of this application;
FIG. 9A and FIG. 9B are a schematic flowchart of still another communication method according to an embodiment of this application;
FIG. 10A and FIG. 10B are a schematic flowchart of still another communication method according to an embodiment of this application;
(a) to (d) in FIG. 11 are schematic diagrams of network architectures according to an embodiment of this application;
FIG. 12 is a schematic block diagram of a communication apparatus according to an embodiment of this application;
FIG. 13 is another schematic block diagram of a communication apparatus according to an embodiment of this application; and
FIG. 14 is a schematic diagram of a structure of a communication apparatus according to an embodiment of this application.

### DESCRIPTION OF EMBODIMENTS

The technical solutions in embodiments of this application may be applied to various communication systems, for example, a 5th generation (5th generation, 5G) system or a new radio (new radio, NR) system, a long term evolution (long term evolution, LTE) system, an LTE frequency division duplex (frequency division duplex, FDD) system, an LTE time division duplex (time division duplex, TDD) system, and the like. The technical solutions provided in this application may be further applied to a future communication system, for example, a 6th generation mobile communication system. The technical solutions in embodiments of this application may be further applied to a device-to-device (device to device, D2D) communication system, a vehicle-to-everything (vehicle-to-everything, V2X) communication system, a machine-to-machine (machine to machine, M2M) communication system, a machine type communication (machine type communication, MTC) system, and an internet of things (internet of things, IoT) communication system, or another communication system.

For ease of understanding embodiments of this application, a communication system to which embodiments of this application are applicable is first briefly described with reference to (a) and (b) in FIG. 1.

The technical solutions in embodiments of this application may be applied to a 5G network architecture shown in (a) in FIG. 1 and/or (b) in FIG. 1, and certainly may also be applied to a future network architecture, for example, a 6th generation (6th generation, 6G) network architecture. This is not specifically limited in embodiments of this application.

The following describes, by using examples with reference to (a) in FIG. 1 and (b) in FIG. 1, a 5G system to which embodiments of this application are applicable. It should be understood that the 5G system described in this specification is merely an example, and should not constitute any limitation on this application.

It should be further understood that some network elements in the 5G system may communicate with each other by using a service-based interface or a point-to-point interface. The following separately describes a 5G system framework based on a point-to-point interface and a 5G system framework based on a service-based interface with reference to (a) in FIG. 1 and (b) in FIG. 1.

As an example for description, (a) in FIG. 1 is a schematic diagram of an architecture of a 5G system 200a to which embodiments of this application are applicable. (a) in FIG. 1 is a schematic diagram of a 5G network architecture based on a point-to-point interface. As shown in (a) in FIG. 1, the network architecture may include but is not limited to the following network elements (or referred to as a function network element, a functional entity, a node, a device, or the like):
user equipment (user equipment, UE), a (radio) access network (radio access network, (R)AN) device, an access and mobility management function (access and mobility management function, AMF) network element, a session management function (session management function, SMF) network element, a user plane function (user plane function, UPF) network element, a policy control function (policy control function, PCF) network element, a unified data management (unified data management, UDM) network element, an application function (application function, AF) network element, a data network (data network, DN), a network slice selection function (network slice selection function, NSSF), an authentication server function (authentication server function, AUSF), unified data management (unified data management, UDM), a capability exposure function (network exposure function, NEF) network element, a unified data repository (unified data repository, UDR), and the like.

The following briefly describes the network elements shown in (a) in FIG. 1.
1. UE: The UE is a terminal that communicates with a (R)AN, and may also be referred to as a terminal device (terminal equipment), an access terminal, a subscriber unit, a subscriber station, a mobile station (mobile station, MS), a mobile terminal (mobile terminal, MT), a remote station, a remote terminal, a mobile device, a user terminal, a terminal, a wireless communication device, a user agent, or a user apparatus. The terminal device may be a device that provides voice/data connectivity to a user, for example, a handheld device or vehicle-mounted device having a wireless connection function. Currently, some examples of the terminal may be: a mobile phone (mobile phone), a tablet computer (pad), a computer having a wireless transceiver function (for example, a notebook computer or a palmtop computer), a mobile internet device (mobile internet device, MID), a virtual reality (virtual reality, VR) device, an augmented reality (augmented reality, AR) device, a wireless terminal in industrial control (industrial control), a wireless terminal in self driving (self driving), a wireless terminal in telemedicine (remote medicine), a wireless terminal in a smart grid (smart grid), a wireless terminal in transportation safety (transportation safety), a wireless terminal in a smart city (smart city), a wireless terminal in a smart home (smart home), a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communication function, a computing device or another processing device connected to a wireless modem, a vehicle-mounted device, a wearable device, a terminal device in a 5G network, a terminal device in a future evolved public land mobile network (public land mobile network, PLMN), and the like.

In addition, the terminal device may alternatively be a terminal device in an internet of things (Internet of things, IoT) system. An IoT is an important part in future development of information technologies. A main technical feature of the IoT is to connect things to a network by using a communication technology, to implement an intelligent network for human-machine interconnection and thing-thing interconnection. IoT technologies can achieve massive connections, intensive coverage, and power saving for terminals by using, for example, a narrow band (narrow band, NB) technology.

It should be understood that the terminal device may be any device that may access the network. The terminal device may communicate with the access network device by using an air interface technology.

Optionally, the user equipment may be configured to serve as a base station. For example, the user equipment may serve as a scheduling entity that provides a sidelink signal between user equipments in V2X, D2D, or the like. For example, a cellular phone and a car communicate with each other through a sidelink signal. The cellular phone communicates with a smart home device without relaying a communication signal through a base station.

2. (R)AN: The (R)AN is configured to provide a network access function for authorized user equipment in a specific area, and can use transmission tunnels of different quality of service based on a level of the user equipment, a service requirement, and the like.

The (R)AN can manage radio resources and provide an access service for user equipment, to forward a control signal and user equipment data between the user equipment and a core network. The (R)AN may also be understood as a base station in a conventional network.

For example, the access network device in embodiments of this application may be any communication device that has a wireless transceiver function and that is configured to communicate with the user equipment. The access network device includes but is not limited to: an evolved NodeB (evolved NodeB, eNB), a radio network controller (radio network controller, RNC), a NodeB (NodeB, NB), a base station controller (base station controller, BSC), a base transceiver station (base transceiver station, BTS), a home base station (a home evolved NodeB, HeNB, or a home NodeB, HNB), a baseband unit (baseBand unit, BBU), and an access point (access point, AP), a wireless relay node, a wireless backhaul node, a transmission point (transmission point, TP), a transmission and reception point (transmission and reception point, TRP), or the like in a wireless fidelity (wireless fidelity, Wi-Fi) system. Alternatively, the access network device may be a gNB or a transmission point (TRP or TP) in a 5G system such as an NR system, may be one antenna panel or a group of antenna panels (including a plurality of antenna panels) of a base station in a 5G system, or may be a network node, for example, a baseband unit (BBU) or a distributed unit (distributed unit, DU), that constitutes a gNB or a transmission point.

In some deployments, a gNB may include a central unit (central unit, CU) and a DU. The gNB may further include an active antenna unit (active antenna unit, AAU). The CU implements some functions of the gNB, and the DU implements some functions of the gNB. For example, the CU is responsible for processing a non-real-time protocol and service, and implements functions of a radio resource control (radio resource control, RRC) layer and a packet data convergence protocol (packet data convergence protocol, PDCP) layer. The DU is responsible for processing a physical layer protocol and a real-time service, and implements functions of a radio link control (radio link control, RLC) layer, a medium access control (medium access control, MAC) layer, and a physical (physical, PHY) layer. The AAU implements some physical layer processing functions, and a function related to radio frequency processing and an active antenna. Information at the RRC layer is eventually converted into information at the PHY layer, or is converted from information at the PHY layer. Therefore, in this architecture, higher layer signaling such as RRC layer signaling may also be considered as being sent by the DU or sent by the DU and the AAU. It may be understood that the access network device may be a device including one or more of a CU node, a DU node, and an AAU node. In addition, the CU may be classified as an access network device in an access network (radio access network, RAN), or the CU may be classified as an access network device in a core network (core network, CN). This is not limited in this application.

3. User plane network element: The user plane network element is configured for packet routing and forwarding, quality of service (quality of service, QoS) handling for user plane data, or the like.

As shown in (a) in FIG. 1, in a 5G communication system, the user plane network element may be a UPF network element, and may include an intermediate user plane function (intermediate user plane function, I-UPF) network element and an anchor user plane function (PDU Session anchor user plane function, PSA-UPF) network element. In a future communication system, the user plane network element may still be the UPF network element, or may have another name. This is not limited in this application.

4. Data network: The data network is configured to provide a network for data transmission.

In a future communication system, the data network may still be the DN, or may have another name. This is not limited in this application.

In a 5G communication system, after accessing a network, a terminal device may establish a protocol data unit (protocol data unit, PDU) session, access a DN by using the PDU session, and may interact with an application function network element (for example, an application server) deployed in the DN. As shown in (a) in FIG. 1, based on different DNs accessed by a user, the network may select a UPF that accesses the DN as a PDU session anchor (PDU Session Anchor, PSA) based on a network policy, and access an application function network element through an N6 interface of the PSA.

5. Access and mobility management network element: The access and mobility management network element is mainly configured for mobility management, access management, and the like. The access and mobility management network element may be configured to implement functions, for example, lawful intercept and access authorization/authentication, other than session management in functions of a mobility management network element (mobility management entity, MME).

As shown in (a) in FIG. 1, in a 5G communication system, the access management network element may be an AMF network element. In a future communication system, the access management network element may still be the AMF network element, or may have another name. This is not limited in this application.

6. Session management network element: The session management network element is mainly configured for session management, internet protocol (internet protocol, IP) address allocation and management for a terminal device, selection and management of terminal device plane functions, termination of interfaces towards policy control and charging functions, downlink data notification, and the like.

As shown in (a) in FIG. 1, in a 5G communication system, the session management network element may be an SMF network element, and may include an intermediate session management function (intermediate session management function, I-SMF) network element and an anchor session management function (anchor session management function, A-SMF) network element. In a future communication system, the access management network element may still be the SMF network element, or may have another name. This is not limited in this application.

7. Policy control network element: The policy control network element is configured to: support a unified policy framework to govern network behavior, provide policy rule information for a control plane function network element (for example, an AMF network element or an SMF network element), and the like.

In a 4G communication system, the policy control network element may be a policy and charging rules function (policy and charging rules function, PCRF) network element. As shown in (a) in FIG. 1, in a 5G communication system, the policy control network element may be a PCF network element. In a future communication system, the policy control network element may still be the PCF network element, or may have another name. This is not limited in this application.

8. Data management network element: The data management network element is configured for terminal device identification handling, access authentication, registration, mobility management, and the like.

As shown in (a) in FIG. 1, in a 5G communication system, the data management network element may be a UDM network element or a UDR network element. In a future communication system, the unified data management may still be the UDM network element or the UDR network element, or may have another name. This is not limited in this application.

The UDM network element or the UDR network element in embodiments of this application may be a user database, and may be used as a single logical repository for storing user data.

9. Application function network element: The application function network element may interact with a 5G system via the application function network element, to access a network exposure function network element or interact with a policy framework for policy control, and the like.

As shown in (a) in FIG. 1, in a 5G communication system, the application function network element may be an application function (AF) network element. In a future communication system, the application function network element may still be the AF network element, or may have another name. This is not limited in this application.

10. Network slice selection network element: The network slice selection network element mainly includes the following functions: selecting a set of network slice instances for UE, determining allowed network slice selection assistance information (network slice selection assistance information, NSSAI), determining an AMF set that can serve the UE, and the like.

As shown in (a) in FIG. 1, in a 5G communication system, the network slice selection network element may be an NSSF network element. In a future communication system, the network slice selection network element may still be the NSSF network element, or may have another name. This is not limited in this application.

11. Authentication service network element: The authentication service network element is configured to: perform service authentication, generate a key to implement two-way authentication on a terminal device, and support a unified authentication framework.

As shown in (a) in FIG. 1, in a 5G communication system, the authentication service network element may be an AUSF network element. In a future communication system, the application function network element may still be the AUSF network element, or may have another name. This is not limited in this application.

12. Network exposure function network element: The network exposure function network element is configured to provide a customized function of network exposure.

As shown in (a) in FIG. 1, in a 5G communication system, the network exposure function network element may be a network exposure function (network exposure function, NEF) network element. In a future communication system, the network exposure function network element may still be the NEF network element, or may have another name. This is not limited in this application.

The 5G communication system may further expose, by using the NEF network element, a capability supported by a 5GC to an external application function network element, for example, provide a small data transmission capability.

It may be understood that the foregoing network elements or functions may be network elements in a hardware device, may be software functions running on dedicated hardware, or may be virtualized functions instantiated on a platform (for example, a cloud platform). One or more services may be obtained through division into the network elements or the functions. Further, services that exist independently of network functions may occur. In this application, instances of the functions, instances of services included in the functions, or instances of the services that exist independently of network functions may be referred to as service instances.

Further, an AF network element may be briefly referred to as an AF, a NEF network element may be briefly referred to as a NEF, and an AMF network element may be briefly referred to as an AMF. In other words, an AF described subsequently in this application may be replaced with an application function network element, a NEF may be replaced with a network exposure function network element, and an AMF may be replaced with an access and mobility management network element.

It may be understood that the foregoing network elements or function network elements may be network elements in a hardware device, may be software functions running on dedicated hardware, or may be virtualized functions instantiated on a platform (for example, a cloud platform). One or more services may be obtained through division into the network elements or the functions. Further, services that exist independently of network functions may occur. In this application, instances of the functions, instances of services included in the functions, or instances of the services that exist independently of network functions may be referred to as service instances.

It can be learned from (a) in FIG. 1 that an interface between control plane network elements in (a) in FIG. 1 is a point-to-point interface.

In the architecture shown in (a) in FIG. 1, names and functions of interfaces between network elements are as follows:
(1) N1 represents an interface between an AMF and a terminal, and may be configured to transmit a QoS control rule and the like to the terminal.
(2) N2 represents an interface between the AMF and a RAN, and may be configured to transmit radio bearer control information and the like from a core network side to the RAN.
(3) N3 represents an interface between the RAN and a UPF, and is mainly configured to transmit uplink and downlink user plane data between the RAN and the UPF.
(4) N4 represents an interface between an SMF and the UPF, and may be configured to transmit information between a control plane and a user plane, including delivery of forwarding rules, QoS control rules, traffic statistics rules, and the like from the control plane to the user plane, and information reporting of the user plane.
(5) N5 represents an interface between an AF and a PCF, and may be configured to: deliver an application service request and report a network event.
(6) N6 represents an interface between the UPF and a DN, and is configured to transmit uplink and downlink user data flows between the UPF and the DN.
(7) N7 represents an interface between the PCF and the SMF, and may be configured to deliver a protocol data unit (protocol data unit, PDU) session granularity control policy and a service data flow granularity control policy.
(8) N8 represents an interface between the AMF and a UDM, and may be used by the AMF to obtain, from the UDM, subscription data and authentication data that are related to access and mobility management, and used by the AMF to register current mobility management related information of the terminal with the UDM.
(9) N9 represents a user plane interface between UPFs, and is configured to transmit uplink and downlink user data flows between the UPFs.
(10) N10 represents an interface between the SMF and the UDM, and may be used by the SMF to obtain, from the UDM, subscription data related to session management, and used by the SMF to register current session related information of the terminal with the UDM.
(11) N11 represents an interface between the SMF and the AMF, and may be configured to: transmit PDU session tunnel information between the RAN and the UPF, transmit a control message to be sent to the terminal, transfer radio resource control information to be sent to the RAN, and the like.
(12) N12 represents an interface between the AMF and an AUSF, and may be used by the AMF to initiate an authentication process to the AUSF, where an SUCI may be carried as a subscription identifier.
(13) N13 represents an interface between the UDM and the AUSF, and may be used by the AUSF to obtain a user authentication vector from the UDM, to perform an authentication process.

As an example for description, (b) in FIG. 1 is a schematic diagram of an architecture of a 5G system 200b to which embodiments of this application are applicable. (b) in FIG. 1 is a schematic diagram of a 5G network architecture based on a service-based interface. As shown in (b) in FIG. 1, the network architecture may include but is not limited to the following network elements (or referred to as a function network element, a functional entity, a node, a device, or the like):

UE, a (R)AN, an AMF network element, an SMF network element, a UPF network element, a PCF network element, a UDM network element, an AF network element, a DN, an NSSF, an AUSF, a UDM, a NEF network element, a UDR, and the like.

For descriptions of functions of the network elements, refer to the descriptions of the functions of the corresponding network elements in (b) in FIG. 1. Details are not described again. A main difference between (b) in FIG. 1 and (a) in FIG. 1 lies in that an interface between control plane network elements in (b) in FIG. 1 is a service-based interface, and an interface between control plane network elements in (a) in FIG. 1 is a point-to-point interface.

Nnssf, Nudr, Nausf, Nnef, Namf, Npcf, Nsmf, Nudm and Naf in (b) in FIG. 1 are service-based interfaces respectively provided by the NSSF, UDR, AUSF, NEF, AMF, PCF, SMF, UDM, and AF, and are configured to invoke corresponding service-based operations. N1, N2, N3, N4, and N6 are interface sequence numbers. For meanings of these interface sequence numbers, refer to meanings defined in the 3rd generation partnership project (3rd generation partnership project, 3GPP) standard protocol. This is not limited herein.

It should be understood that the network architecture to which embodiments of this application can be applied is merely an example for description, and the network architecture to which embodiments of this application are applicable is not limited thereto. Any network architecture that can implement functions of the foregoing network elements is applicable to embodiments of this application.

It should be further understood that the AMF, the SMF, the UPF, the PCF, the NEF, and the like shown in (a) in FIG. 1 or (b) in FIG. 1 may be understood as network elements configured to implement different functions, for example, may be combined into a network slice as required. These network elements may be independent devices, or may be integrated into a same device to implement different functions, or may be network elements in a hardware device, or may be software functions running on dedicated hardware, or may be virtualized functions instantiated on a platform (for example, a cloud platform). A specific form of the network elements is not limited in this application.

It should be further understood that the foregoing names are defined merely for distinguishing between different functions, and should not constitute any limitation on this application. This application does not exclude a possibility of using other names in the 5G network and another future network. For example, in a 6G network, some or all of the foregoing network elements may still use terms in 5G, or may use other names.

It should be further understood that, names of the interfaces between the network elements in (a) in FIG. 1 or (b) in FIG. 1 are merely examples. During specific implementation, the names of the interfaces may be other names. This is not specifically limited in this application. In addition, names of messages (or signaling) transmitted between the foregoing network elements are merely examples, and do not constitute any limitation on functions of the messages.

Embodiments of this application mainly relate to passive tag inventory. Passive IoT (namely, radio frequency identification (radio frequency identification, RFID)) has large-scale deployment and application scenarios, including but not limited to:
(1) Logistics and warehousing: including goods inventory and tracking, and transportation process environment and goods status monitoring for high-value goods (such as vaccines); and
(2) Industrial manufacturing: including environment and device status monitoring.

RFID has the prospect of large-scale deployment and application. It is predicted that hundreds of billions of devices will be covered in the future. However, a function brought by a passive or semi-passive tag is simple. As a result, the RFID needs to rely on external excitation to send information. The excitation is generally from a card reader (or referred to as a reader/writer). A current deployment manner of the card reader has characteristics such as a short communication distance between the card reader and a tag, difficult tag management, and the like. As a result, the scope and scale of scenarios to which passive IoT tag inventory is applicable are small.

An inventory manner of a passive IoT tag is shown in FIG. 2. FIG. 2 is a schematic diagram of a passive IoT tag management manner. In a scenario shown in FIG. 2, a communication distance between a card reader and a tag is short, and a device equipped with the card reader cannot manage tags in a large range.

A P-IoT Tag shown in FIG. 2 represents a passive IoT tag. A card reader represents a reader/writer (or referred to as a reader or an interrogator) in a radio frequency identification technology, and is a device configured to read (or sometimes may write) tag information. An application server may be understood as an AF network element.

It can be learned from FIG. 2 that the card reader performs a management operation such as read (read), write (write), access (access), kill (kill), or the like on the passive IoT tag based on an indication of the application server. The scope and scale of scenarios to which this passive IoT tag inventory manner is applicable are small.

It should be noted that the foregoing "tag" may also be understood as a terminal.

In embodiments of this application, based on the architecture of the 5G communication system described in (a) in FIG. 1 or (b) in FIG. 1, a new radio technology in which a card reader is integrated into a base station is used, to implement unified management performed by the base station on the passive IoT. In this way, inventory of passive IoT terminals in a large-scale and large-coverage environment is implemented.

It should be understood that the method provided in embodiments of this application may be applied to a 5G communication system, for example, the communication system shown in (a) in FIG. 1 or (b) in FIG. 1. However, a scenario to which the method can be applied is not limited in embodiments of this application. For example, the method is also applicable to another network architecture including a network element that can implement a corresponding function, and for another example, an architecture of the 6th generation (the 6th generation, 6G) communication system. In addition, in a future communication system, a function of each network element in embodiments of this application may remain the same while a name of the network element may change.

To facilitate understanding of the technical solutions in embodiments of this application, before the solutions in embodiments of this application are described based on a 5G architecture, some terms or concepts that may be used in embodiments of this application are first briefly described.

### 1. Packet data unit (packet data unit, PDU) session.

The PDU session is an association between a terminal device and a DN, and is used to provide a PDU connectivity service. After accessing a network, UE establishes a PDU session, accesses an external DN through the PDU session, and interacts with an application server deployed in the DN. Based on the DN accessed by a user, the network may select a UPF that accesses the DN as an anchor (Anchor) (namely, PSA UPF) based on a network policy, and access the application server through an N6 interface of the PSA UPF. In addition, the 5G system may further expose, by using a NEF network element, a capability supported by a 5G core (5G core, 5GC) to an external AF.

### 2. RFID.

A radio frequency identification technology is a new automatic identification technology developed in 1980s. The radio frequency identification technology is a technology that uses a radio frequency signal to transmit information in a contactless manner through space coupling (an alternating magnetic field or an electromagnetic field) and implements identification through the transmitted information.

The RFID is a simple wireless system for controlling, detecting, and tracking an object. The wireless system includes a card reader (or referred to as a reader/writer, a reader, an interrogator, and the like) and many terminals (or referred to as transponders). An RFID card reader performs wireless communication with an RFID terminal by using an antenna, and may implement a read or write operation on a terminal identity and memory data. A typical card reader includes a high frequency module (a transmitter and a receiver), a control unit, and a reader antenna.

A terminal (Tag) includes a coupling element and a chip. Each terminal has a unique electronic code, and is attached to an object to identify a target object. A card reader (Reader) is a device configured to read (or sometimes write) terminal information, and may be designed as a handheld RFID card reader or a fixed card reader.

### 3. Terminal management.

According to the Gen2V2 protocol, a card reader uses three basic operations to manage a terminal group (tag population) in an effective read area of the card reader. Each of these operations may include a plurality of commands. The operations are defined as follows:
- Select, used to select a terminal group. A command set used for the select operation includes a select (Select) command.
- Inventory, used to identify an individual terminal in the terminal group. A command set used for the inventory operation includes a query (Query) command, a Query Adjust command, a Query Rep command, an ACK command, and an NAK command.
- Access, used to communicate with the identified terminal. The card reader may perform a core operation, for example, read, write, lock, or kill (kill) a terminal, a security-related operation, for example, terminal authentication, or a file-related operation, for example, opening a specific file in a terminal memory. A command set used for the access operation includes a Req_RN command and an authenticate (Authenticate) command.

### 4. Terminal management function network element.

The terminal management function network element in embodiments of this application may be a newly added function network element that is independently disposed in a 5G core (5G core, 5GC), or may be a network element that is co-located with an existing network element in the 5GC (for example, co-located with a NEF or an AMF). That the terminal management function network element is co-located with an existing network element may be understood as function enhancement of an existing network element, so that the existing network element has a terminal management function.

The terminal management function network element is configured to implement forwarding and handling of a terminal inventory request message. A specific forwarding and handling manner is described in detail in the following embodiment. Details are not described herein again.

The foregoing describes, with reference to (a) in FIG. 1 and (b) in FIG. 1, the scenarios to which embodiments of this application can be applied, briefly describes, with reference to FIG. 2, defects of a current terminal inventory method, and further briefly describes basic concepts in this application. The following describes in detail a communication method provided in this application with reference to the accompanying drawings.

A specific structure of an execution body of a method provided in embodiments of this application is not particularly limited in the following embodiments provided that communication can be performed according to the method provided in embodiments of this application by running a program that records code of the method provided in embodiments of this application. For example, the method provided in embodiments of this application may be performed by a core network device, or a functional module that is in the core network device and that can invoke and execute the program.

For ease of understanding of embodiments of this application, the following descriptions are provided.

First, in this application, "indicate" may be understood as "enable", and "enable" may include direct enabling and indirect enabling. When a piece of information is described to enable A, the information may directly enable A or indirectly enable A, but it does not mean that the information definitely carries A.

Information enabled by the information is referred to as to-be-enabled information. In a specific implementation process, there are many manners of enabling the to-be-enabled information, for example, but not limited to, the to-be-enabled information may be directly enabled, for example, the to-be-enabled information itself or an index of the to-be-enabled information. Alternatively, the to-be-enabled information may be indirectly enabled by enabling other information, where there is an association relationship between the other information and the to-be-enabled information. Alternatively, only a part of the to-be-enabled information may be enabled, and other parts of the to-be-enabled information is known or agreed on in advance. For example, specific information may alternatively be enabled by using an arrangement sequence that is of a plurality of pieces of information and that is pre-agreed on (for example, stipulated in a protocol), to reduce enabling overheads to some extent. In addition, common parts of all pieces of information may further be enabled together, to reduce enabling overheads caused by separately enabling same information.

Second, "first", "second", and various numeric numbers (for example, "#1", and "#2") shown in this application are merely for ease of description, and are used to distinguish between objects, but are not intended to limit the scope of embodiments of this application, for example, are used to distinguish between different messages, but are not used to describe a specific order or sequence. It should be understood that objects described in this way are interchangeable in a proper circumstance, so that a solution other than embodiments of this application can be described.

Third, in this application, "preset" may include "predefined", for example, defined in a protocol. "Predefined" may be implemented in a manner of storing corresponding code, a table or other related information that may be used for indication in a device (for example, including network elements) in advance. A specific implementation of "predefined" is not limited in this application.

Fourth, "stored" in embodiments of this application may be "stored in one or more memories". The one or more memories may be separately disposed, or may be integrated into an encoder or a decoder, a processor, or a communication apparatus. Alternatively, some of the one or more memories may be separately disposed, and some of the one or more memories are integrated into a decoder, a processor, or a communication apparatus. The memory may be a storage medium in any form. This is not limited in this application.

Fifth, the term "and/or" in this specification is merely an association relationship for describing associated objects, and indicates that three relationships may exist. For example, A and/or B may indicate the following three cases: Only A exists, both A and B exist, and only B exists. In addition, the character "/" in this specification usually indicates an "or" relationship between associated objects.

Sixth, "protocols" in embodiments of this application may be standard protocols in the communication field, for example, may include a 5G protocol, a new radio (new radio, NR) protocol, and a related protocol applied to a future communication system. This is not limited in this application.

Without loss of generality, the following uses interaction between network elements as an example to describe in detail the communication method provided in embodiments of this application.

For ease of understanding, an example in which an access network device is referred to as a RAN, a mobility management function network element is referred to as an AMF, a terminal management control plane function network element is referred to as a terminal management function network element-CP, a terminal management user plane function network element is referred to as a terminal management function network element-UP, a session management function network element is referred to as an SMF, an application function network element is referred to as an AF, a user plane function network element is referred to as a UPF, and a terminal is referred to as UE is used for description below.

It should be noted that a name of a device is not limited in this application.

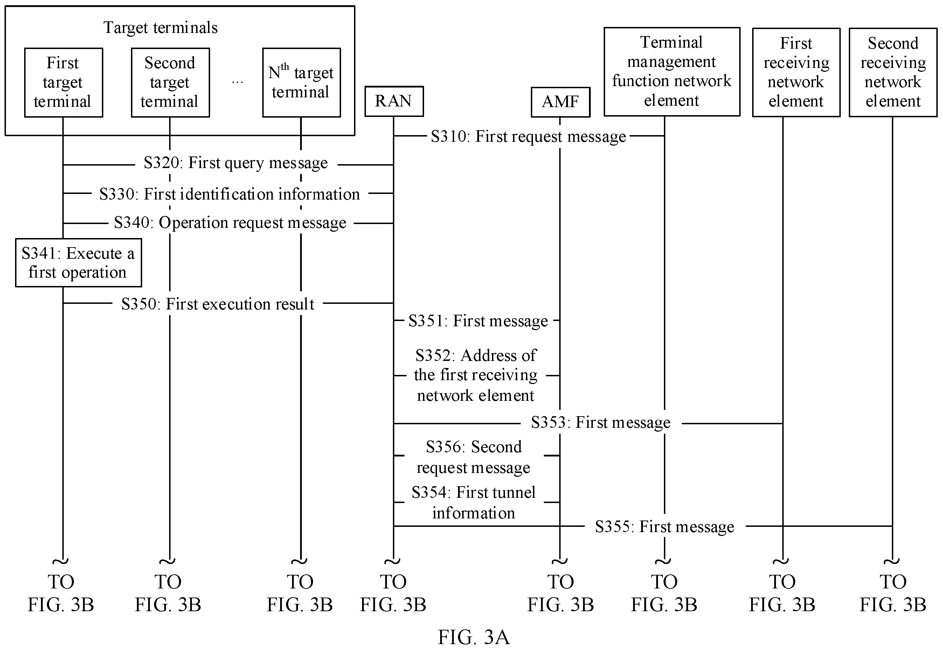

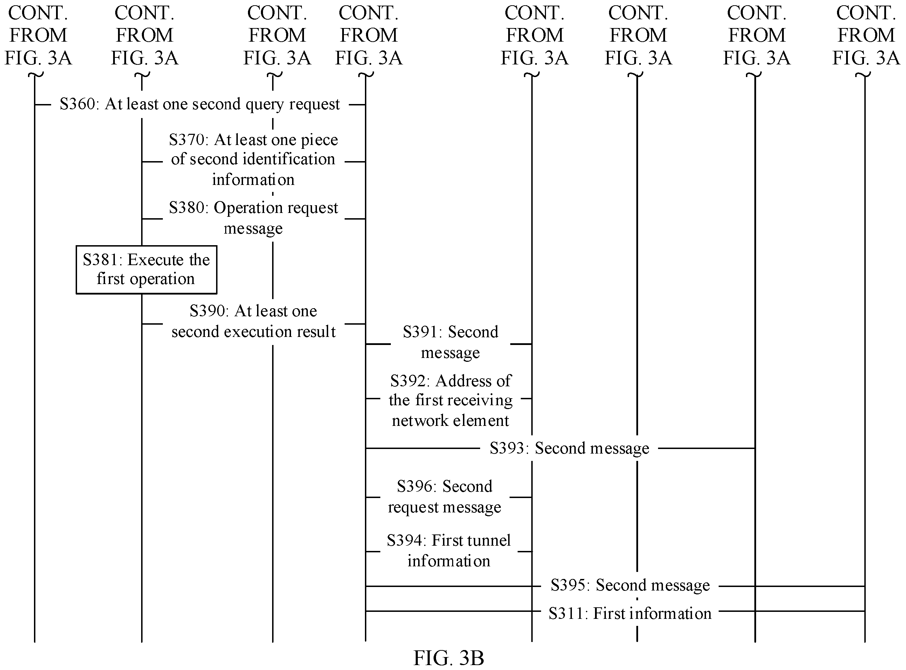

FIG. 3A and FIG. 3B are a schematic flowchart of a communication method according to an embodiment of this application. The following describes the communication method in detail in combination with the steps.

S310: A RAN receives a first request message from a terminal management function network element, or a terminal management function network element sends a first request message to a RAN.

For example, the terminal management function network element sends the first request message to the RAN in the following several possible manners:

The terminal management function network element directly sends the first request message to the RAN, the terminal management function network element sends the first request message to the RAN by using an AMF, a terminal management function network element-CP sends the first request message to the RAN (for example, the terminal management function network element-CP sends the first request message to the RAN after receiving a third request message from an AF), or a terminal management function network element-CP sends the first request message to the RAN by using an AMF (for example, the terminal management function network element-CP sends the first request message to the RAN by using the AMF after receiving a third request message from an AF).

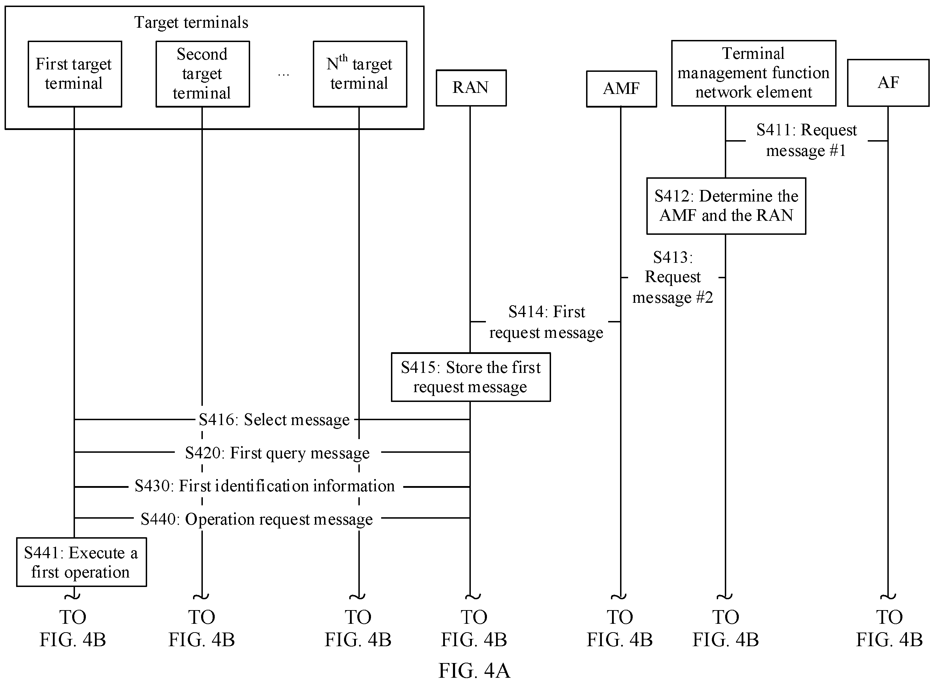

With reference to specific embodiments (such as FIG. 4A and FIG. 4B, FIG. 6A and FIG. 6B, FIG. 7A and FIG. 7B, FIG. 9A and FIG. 9B, and FIG. 10A and FIG. 10B below), the following describes in detail how the terminal management function network element triggers sending of the first request message received by the RAN from the AMF. To avoid repetition, details are not described herein.

It should be noted that the foregoing merely describes, by using an example, a possible manner in which the terminal management function network element sends the first request message to the RAN, and does not constitute any limitation on the protection scope of this application. There may be another transmission path. Examples are not described one by one herein.

Specifically, the first request message is used to request to execute a first operation on target terminals. The first request message includes identification information of the target terminals and indication information of the first operation.

For example, the first request message may be understood as a request message for requesting the RAN to execute inventory on terminals, and may be referred to as an inventory request message. In this application, inventory indicates to execute the first operation on the target terminals.

The identification information of the target terminals indicates the target terminals on which inventory is to be executed, and the identification information of the target terminals includes but is not limited to:
indication information of any one of the target terminals, a value interval to which identifiers of the target terminals belong, an identifier list of the target terminals, a group identifier of a terminal group to which the target terminals belong, identification information of a user to which the target terminals belong, a type of the target terminals, identification information of an application to which the target terminals belong, or the like.

For example, the terminals on which inventory is to be executed include three terminals, and identifiers of the three terminals are respectively a terminal #1, a terminal #2, and a terminal #3. The identification information of the target terminals may be an identifier list of the terminals, for example, the terminal #1, the terminal #2, and the terminal #3.

For another example, the terminals on which inventory is to be executed include three terminals, and identifiers of the three terminals are respectively 100, 101, and 102. The identification information of the target terminal may be an interval of the terminal identifiers, for example, 100 to 102.

For still another example, there are a total of three terminals within coverage of the RAN, and identifiers of the three terminals are respectively a terminal #1, a terminal #2, and a terminal #3. The indication information of any one of the target terminals indicates to perform inventory on all the three terminals.

For still another example, the terminals on which inventory is to be executed include three terminals, the three terminals belong to one terminal group, and a group identifier of the terminal group is a terminal group #1. The identification information of the target terminals may be a group identifier of a terminal group to which the target terminals belong, for example, the terminal group #1.

For still another example, the terminals on which inventory is to be executed include three terminals, the three terminals belong to one user, and an identifier of the user is a user #1. The identification information of the target terminals may be an identifier of a user to which the target terminals belong, for example, the user #1.

For still another example, the terminals on which inventory is to be executed include three terminals, and the three terminals are all passive terminals or semi-passive terminals. The identification information of the target terminals may be a passive terminal or a semi-passive terminal.

For still another example, the terminals on which inventory is to be executed include three terminals, the three terminals belong to one application, and an application identifier of the application is an application #1. The identification information of the target terminals may be an identifier of an application to which the target terminals belong, for example, the application #1.

It should be noted that the foregoing merely describes, by using examples, possible forms of the identification information of the terminals on which inventory is to be executed, and does not constitute any limitation on the protection scope of this application. Other identification information that can identify the terminals on which inventory is to be executed also falls within the protection scope of this application. Examples are not described one by one herein.

The indication information of the first operation indicates a to-be-executed first operation, and includes but is not limited to:
an identifier of the first operation, a value interval to which the identifier of the first operation belongs, an identifier list of the first operation, a group identifier of an operation group to which the first operation belongs, and the like.

For example, the to-be-executed operation includes one operation, and an identifier of the operation is an operation #1. The indication information of the first operation may be an identifier of the first operation, for example, the operation #1.

For another example, the to-be-executed operation includes three operations, and identifiers of the three operations are respectively an operation #1, an operation #2, and an operation #3. The indication information of the first operation may be an identifier list of the operations, for example, the operation #1, the operation #2, and the operation #3.

For still another example, the to-be-executed operation includes three operations, the three operations belong to one operation group, and a group identifier of the operation group is an operation group #1. The indication information of the first operation may be a group identifier of an operation group to which the operation belongs, for example, the operation group #1.

It should be understood that the first operation may include one or more operations. When the first operation includes a plurality of operations (such as an operation #1 and an operation #2), the indication information of the first operation may include indication information that respectively indicates the plurality of operations (such as indication information indicating the operation #1 and indication information indicating the operation #2).

It should be noted that the foregoing merely describes, by using examples, possible forms of the indication information of the to-be-executed operation, and does not constitute any limitation on the protection scope of this application. Other indication information that can indicate an operation on which inventory is to be executed also falls within the protection scope of this application. Examples are not described one by one herein.

For example, the first operation includes at least one of the following:
query a terminal identifier, read, write, kill, lock, blockwrite, blockerase, access, encrypt, decrypt, and the like.

For example, in some cases, the first request message may not include the identification information of the target terminals. For example, the first request message includes identification information of an area, and indicates to perform inventory on terminals in an area. For another example, the first request message only triggers inventory, and the target terminals for specific inventory may be all terminals covered by the RAN.

For example, in some cases, the first request message may not include the indication information of the first operation. For example, the AF has no command to execute an operation. For another example, a default operation is to query a terminal identifier, and no additional indication needs to be performed by using an operation indication.

After receiving the first request message, the RAN executes an inventory process. The method procedure shown in FIG. 3A and FIG. 3B further includes:

S320: The RAN sends a first query message to the target terminals, or the target terminals receive a first query message from the RAN.

For example, the target terminals include a first target terminal, a second target terminal, ..., and an N^{th} target terminal shown in FIG. 3A and FIG. 3B.

The first query message is used to obtain the identification information of the target terminals.

It should be noted that, after receiving the first request message, the RAN triggers an inventory procedure, which specifically includes:

First, the RAN sends radio frequency information to all terminals within coverage, to provide an excitation signal for all the terminals in the coverage area of the RAN, so that the terminals can send a signal to the RAN.

Then, the RAN sends a select message to all the terminals within coverage, where the select message is used to select terminals on which inventory is to be executed (namely, the target terminals) from all the terminals, and the target terminals indicated by the select message are determined based on the first request message.

Then, the RAN sends a query request message to the selected terminals in all the terminals, where the query request message is used to obtain identifiers of the selected terminals, and the selected terminals are the terminals on which inventory is to be executed in all the terminals. The selected target terminals initiate a random access process, and one terminal device, which is the first target terminal in this embodiment, succeeds in random access. A specific random access process may be as follows: The RAN includes a first random number in the first query message, and the selected target terminals locally set a second random number based on the first random number. If a second random number set by one terminal is 0, the terminal sends a third random number to the RAN. If the RAN can correctly receive the third random number, the RAN sends the third random number to the terminal device. When the terminal receives the third random number, the terminal device determines that random access succeeds. After determining that the random access succeeds, the terminal sends identification information of the terminal to the RAN.

Finally, the RAN receives the identification information sent by the first target terminal.

A specific inventory procedure is not described in detail in this application. For details, refer to descriptions of a current inventory procedure.

Further, the RAN can obtain, by using a first query request, the first identification information of the first target terminal on which inventory is to be executed. The method procedure shown in FIG. 3A and FIG. 3B further includes:

S330: The RAN receives the first identification information from the first target terminal, or the first target terminal sends the first identification information to the RAN.

The first target terminal is one of the target terminals on which inventory is to be executed. For example, the first target terminal is a random target terminal in the target terminals on which inventory is to be executed, or the first target terminal is any target terminal in the target terminals on which inventory is to be executed.

When the indication information of the first operation indicates that the first operation is to query a terminal identifier, or in other words, the first request message does not include the indication information of the first operation, after obtaining the first identification information of the first target terminal, the RAN does not need to send an operation request message corresponding to the indication information of the first operation to the first target terminal; or
when the indication information of the first operation indicates that the first operation is an operation other than querying a terminal identifier, the method procedure shown in FIG. 3A and FIG. 3B further includes:
S340: The RAN sends an operation request message to the first target terminal, or the first target terminal receives an operation request message from the RAN.

The operation request message is used to request the first target terminal to execute the first operation.

S341: The first target terminal executes the first operation to obtain a first execution result.

In a possible implementation, if the first operation is read, the execution result includes read data.

In another possible implementation, if the first operation is write, the execution result is an indication of success or failure.

Further, after that the first target terminal executes the first operation to obtain a first execution result, the method procedure shown in FIG. 3A and FIG. 3B further includes:

S350: The first target terminal sends the first execution result to the RAN, or the RAN receives the first execution result from the first target terminal.

It should be noted that the RAN needs to complete inventory of all target terminals. When the target terminals on which inventory is to be executed include a plurality of target terminals, after receiving the first execution result of the first target terminal, the RAN further needs to continue to execute inventory on other target terminals sequentially until one time of inventory is completed, where "sequentially" should be understood as sending a query request (also referred to as a query repeat request) after an execution result of one target terminal is received. This is repeated until one time of inventory is completed. In other words, the RAN needs to execute S320 to S350 on each of the target terminals on which inventory is to be executed.

The method procedure shown in FIG. 3A and FIG. 3B further includes:

S360: The RAN sends at least one second query request to the target terminals, or the target terminals receive at least one second query request from the RAN.

It should be understood that the RAN sends at least one second query request to the target terminals is: The RAN sends the at least one second query request to the target terminals. For ease of description, query requests after inventory is executed on the first target terminal are collectively referred to as the second query request.

A specific process is as follows: The RAN sends a query repeat request to the target terminals, and after receiving the query repeat request, the first target terminal receives exits the inventory process, to be specific, does not respond to an operation request for the target terminals. After receiving the query repeat request, other target terminals initiate a random access process, and one terminal device, which is the second target terminal in this embodiment, succeeds in random access. A specific random access process may be as follows: The other target terminals subtract 1 from the previously set second random number, and if the second random number of one target terminal device is reduced to 0, the target terminal sends a fourth random number to the RAN. If the RAN can correctly receive the fourth random number, the RAN sends the fourth random number to the target terminal. When the target terminal receives the fourth random number, the target terminal determines that random access succeeds. When the second target terminal succeeds in random access, identification information of the second target terminal is sent to the RAN.

S370: The RAN receives at least one piece of second identification information from the at least one second target terminal, or the at least one second target terminal sends at least one piece of second identification information to the RAN.

The at least one second target terminal is a target terminal other than the first target terminal in the target terminals on which inventory is to be executed.

It should be understood that the at least one second target terminal sends at least one piece of second identification information to the RAN is: The at least one second target terminal sends the second identification information to the RAN respectively in response to different second query requests.

S380: The RAN sends the operation request message to the at least one second target terminal, or the at least one second target terminal receives the operation request message from the RAN.

The operation request message is used to request the at least one second target terminal to execute the first operation.

Further, at least one second execution result is obtained after the at least one second target terminal executes the first operation. The method procedure shown in FIG. 3A and FIG. 3B further includes:
S381: The at least one second target terminal executes the first operation to obtain the at least one second execution result.

In a possible implementation, if the first operation is read, the second execution result includes read data.

In another possible implementation, if the first operation is write, the second execution result is an indication of success or failure.

S390: The RAN receives the at least one second execution result from the at least one second target terminal, or the at least one second target terminal sends the at least one second execution result to the RAN.

For example, when the indication information of the first operation indicates that the first operation is an operation other than querying a terminal identifier, the first request message further includes an operation parameter corresponding to the first operation, and the operation request message further includes the operation parameter.

For example, when the indication information of the first operation indicates to execute the read operation, the indication information of the first operation may be referred to as a read command. Specifically, for the read command, the operation parameter includes a read storage area, a start byte address of the read storage area, a byte quantity, and the like.

For another example, when the indication information of the first operation indicates to execute the write operation, the indication information of the first operation may be referred to as a write command. Specifically, for the write command, the operation parameter includes a write storage area, a start byte of the read storage area, and written data.

Optionally, for write information, same write information may be carried for all the target terminals, or different write information may be carried for different target terminals.

It should be noted that the indication information and the operation parameter that are of the first operation and that may be included in the first request message are not limited in this embodiment of this application. Reference may be made to indication information and an operation parameter that are of an operation and that are received by a card reader in a conventional technology. Alternatively, the indication information and the operation parameter may be indication information and an operation parameter that are of an operation and that are received by a card reader after development of technologies in the future. Details are not described herein again.

For example, after obtaining the identification information and the execution results of the target terminals, the RAN may report the identification information and the execution results of the target terminals to the terminal management function network element. Specifically, the RAN reports the identification information and the execution results of the target terminals in the following two manners:
Manner 1: For each target terminal, the RAN separately reports the identification information and the execution result of the target terminal.

For example, after receiving the first execution result from the first target terminal, the RAN reports the first identification information and the first execution result of the first target terminal.

Optionally, the following several possible reporting manners may be used:
Possibility 1: The RAN performs reporting by using the AMF.

In the case of the possibility 1, the RAN sends a first message to the AMF, where the first message includes the first identification information and the first execution result. The method procedure shown in FIG. 3A and FIG. 3B further includes:
S351: The RAN sends a first message to the AMF.

Possibility 2: The RAN performs reporting by using a first receiving network element. The first receiving network element includes a NEF or a terminal management function network element.

In the case of the possibility 2, the AMF receives an address of the first receiving network element, where the address is an address used by the first receiving network element to receive information; and the RAN sends a first message to the first receiving network element based on the address, where the first message includes the first identification information and the first execution result.

The method procedure shown in FIG. 3A and FIG. 3B further includes:
S3 52: The RAN receives an address of a first receiving network element from the AMF.

Optionally, when the first receiving network element is a terminal management function network element, the terminal management function network element sends an address of the terminal management function network element to the RAN by using the AMF.

Optionally, when the first receiving network element is a NEF, the NEF sends an address of the NEF to the RAN by using the AMF.

S353: The RAN sends a first message to the first receiving network element.

Possibility 3: The RAN performs reporting by using a second receiving network element. The second receiving network element includes a UPF or a terminal management function network element-UP.

In the case of the possibility 3, the RAN receives first tunnel information, where the first tunnel information indicates a user plane port used by the second receiving network element to receive information; and the RAN sends a first message to the second receiving network element based on the first tunnel information, where the first message includes the first identification information and the first execution result.

The method procedure shown in FIG. 3A and FIG. 3B further includes:
S354: The RAN receives first tunnel information from the AMF.

Optionally, when the first receiving network element is a UPF, the UPF sends the first tunnel information to the RAN by using the AMF.

Optionally, when the first receiving network element is a terminal management function network element-UP, the terminal management function network element-UP sends the first tunnel information to the RAN by using the AMF.

S355: The RAN sends a first message to the second receiving network element.

For example, that the AMF sends the first tunnel information to the RAN may be performed based on a request of the RAN. The method procedure shown in FIG. 3A and FIG. 3B further includes:
S356: The RAN sends a second request message to the AMF.

The second request message is used to request to obtain the first tunnel information.

It should be noted that, in the case of the possibility 3, the RAN may report an inventory result (such as the foregoing identification information and execution result) through a tunnel. The following describes establishment and use of the tunnel with reference to specific embodiments. Details are not described herein again.

Manner 2: For all the target terminals (namely, all the target terminals received by the RAN), the RAN reports the identification information and the execution results of the target terminals together.

For example, after receiving the first execution result from the first target terminal and the at least one second execution result of the at least one second target terminal, the RAN reports the identification information of the plurality of terminals and the execution results of the plurality of terminals. The plurality of terminals include the first target terminal and the at least one second target terminal.

Optionally, similar to the foregoing manner 1, the following several possible reporting manners may be used:
Possibility 1: The RAN performs reporting by using the AMF.

In the case of the possibility 1, the RAN sends a second message to the AMF, where the second message includes identification information of the plurality of terminals and execution results of the plurality of terminals. The method procedure shown in FIG. 3A and FIG. 3B further includes:
S391: The RAN sends a second message to the AMF.

Possibility 2: The RAN performs reporting by using a first receiving network element. The first receiving network element includes a NEF or a terminal management function network element.

In the case of the possibility 2, the RAN receives an address of the first receiving network element, where the address is an address used by the first receiving network element to receive information; and the RAN sends a second message to the first receiving network element based on the address, where the second message includes identification information of the plurality of terminals and execution results of the plurality of terminals.

The method procedure shown in FIG. 3A and FIG. 3B further includes:
S392: The RAN receives an address of a first receiving network element from the AMF.

Optionally, when the first receiving network element is a terminal management function network element, the terminal management function network element sends an address of the terminal management function network element to the RAN by using the AMF.

Optionally, when the first receiving network element is a NEF, the NEF sends an address of the NEF to the RAN by using the AMF.

S393: The RAN sends a second message to the first receiving network element.

Possibility 3: The RAN performs reporting by using a second receiving network element. The second receiving network element includes a UPF or a terminal management function network element-UP.

In the case of the possibility 3, the RAN receives first tunnel information, where the first tunnel information indicates a user plane port used by the second receiving network element to receive information; and the RAN sends a second message to the second receiving network element based on the first tunnel information, where the second message includes identification information of the plurality of terminals and execution results of the plurality of terminals.

The method procedure shown in FIG. 3A and FIG. 3B further includes:
S394: The RAN receives first tunnel information from the AMF.

Optionally, when the first receiving network element is a UPF, an SMF sends the first tunnel information to the RAN by using the AMF.

Optionally, when the first receiving network element is a terminal management function network element-UP, the terminal management function network element-CP sends the first tunnel information to the RAN by using the AMF.

S395: The RAN sends a first message to the second receiving network element.

For example, that the AMF sends the first tunnel information to the RAN may be performed based on a request of the RAN. The method procedure shown in FIG. 3A and FIG. 3B further includes:
S396: The RAN sends a second request message to the AMF.

The second request message is used to request to obtain the first tunnel information.

It should be noted that, in the case of the possibility 3, the RAN may perform reporting through a tunnel. The following describes establishment and use of the tunnel with reference to specific embodiments. Details are not described herein again.

In a possible implementation, the RAN may receive a plurality of first request messages that respectively request the RAN to execute inventory on different target terminals. To distinguish that a reported inventory result is for a specific first request message, association may be performed by using an association identifier. The first request message includes a first association identifier. The first association identifier is used to associate the first request message with the first message or is used to associate the first request message with the second message. The first message and/or the second message include/includes the first association identifier.

In a possible implementation, the first request message further includes first indication information. The first indication information indicates an area in which the RAN sends the query request to the target terminals.

For example, the area in which the query request is sent includes locations of terminals on which inventory is to be executed, and the first indication information includes but is not limited to 3GPP location information (such as a TA list or a cell list).

For example, the terminals on which inventory is to be executed include three terminals, and the three terminals are respectively located in a cell #1, a cell #2, and a cell #3. The indication information indicating an inventory area may be 3GPP location information of the terminals, such as the cell #1, the cell #2, and the cell #3.

It should be noted that a specific form of the indication information indicating the area in which the query request is sent is not limited in this embodiment of this application, provided that the area in which the query request is sent can be indicated.

In a possible implementation, the first request message further includes operation interval duration indication information. The operation interval duration indication information may be understood as a minimum inventory interval, and indicates that after one time of inventory ends, another time of inventory is started after a time interval. The operation interval duration indication information indicates duration of an interval between two adjacent operations.

Optionally, when the first request message includes the operation interval duration indication information, after one operation executed by the RAN on the target terminals ends, the RAN executes another operation on the target terminals, where an interval between a start moment of the another operation and an end moment of the operation is the duration.

In a possible implementation, the first request message further includes operation start moment indication information. The operation start moment indication information indicates a start moment of the 1^{st} operation.

In a possible implementation, the first request message further includes operation timeout moment indication information. The operation timeout moment indication information indicates an end moment of the last operation.

Optionally, after completing one time of inventory, the RAN may notify a core network device by using first information. The method procedure shown in FIG. 3A and FIG. 3B further includes:
311: The RAN sends first information.

The first information indicates to complete the first operation on the target terminals.

Specifically, after performing S360, if the RAN does not receive, within a configured time, a random access request message initiated by any terminal, the RAN determines that inventory of the target terminals within coverage of the RAN is completed (that is, a query is completed or the first operation is completed).

For ease of understanding of the communication method provided in this application, the following provides descriptions with reference to specific embodiments.

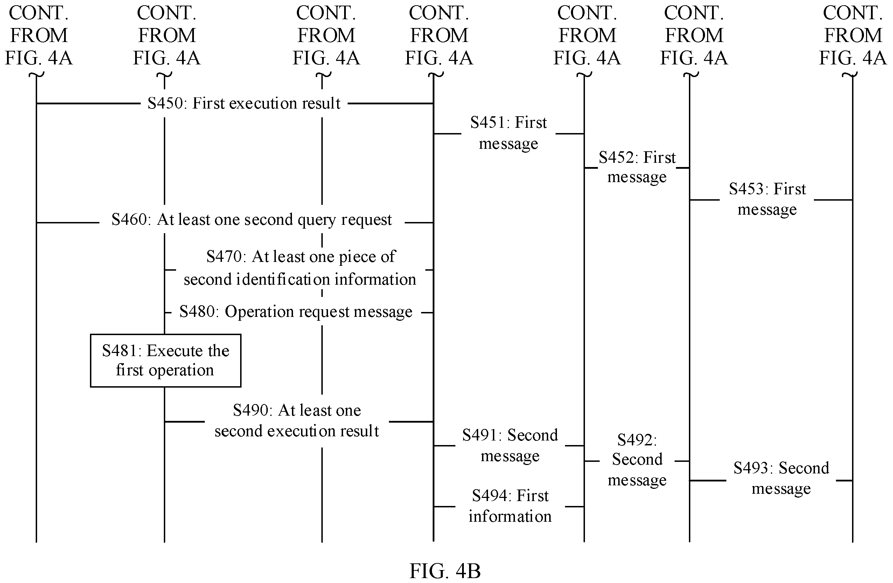

The following describes the embodiment in FIG. 3A and FIG. 3B in detail with reference to specific embodiments. The following embodiment in FIG. 4A and FIG. 4B is a specific implementation of the embodiment in FIG. 3A and FIG. 3B. FIG. 4A and FIG. 4B are a schematic flowchart of another communication method according to an embodiment of this application. The following describes the communication method in detail in combination with the steps.

S411: An AF of an application sends a request message #1 to a terminal management function network element, or a terminal management function network element receives a request message #1 from an AF.

The request message #1 is used to request to execute a first operation on target terminals, and the request message #1 includes identification information of the target terminals, indication information of the first operation, and information about the application.

The identification information of the target terminals and the indication information of the first operation are described above. Details are not described herein again. The information about the application includes an identifier of the application or a data network access identifier of the application.

For example, the application identifier is used to identify an AF that initiates an inventory request.

For example, an identifier of an AF that initiates an inventory request is AF #1, and the application identifier may be AF #1.

In this embodiment, when the request message #1 does not carry the indication information of the first operation, it indicates that an executed command is a query (query) command, that is, a terminal identifier is queried. Alternatively, when the request message #1 carries the indication information of the first operation and the indication information of the first operation includes query, it indicates that an executed command is a query (query) command.

Optionally, the request message #1 further includes first area indication information.

For example, a first area includes locations of terminals on which inventory is to be executed. The first area indication information indicating the first area includes but is not limited to a geographical location, a municipal location, and 3GPP location information (such as a TA list or a cell list).

For example, the terminals on which inventory is to be executed include three terminals, and the three terminals are respectively located in a cell #1, a cell #2, and a cell #3. The first area indication information indicating the first area may be 3GPP location information of the terminals, such as the cell #1, the cell #2, and the cell #3.

It should be noted that a specific form of the first area indication information indicating the first area is not limited in this embodiment of this application, provided that locations of terminals on which inventory is to be executed can be indicated.

Optionally, the request message #1 further includes an operation parameter. The operation parameter is described above. Details are not described herein again.

Optionally, the request message #1 further includes a notification address #1 and an association identifier #1.

For example, the notification address #1 indicates an address used by the AF to receive terminal information and a command execution result, for example, an address of the AF.

For example, the association identifier #1 is used to associate the message #1 with a response message #1 for the message #1.

Optionally, the request message #1 further includes at least one of the following: operation interval duration indication information, operation start moment indication information, and operation timeout moment indication information.

Further, after receiving the request message #1, the terminal management function network element can determine an AMF and a corresponding RAN based on the information (such as the identification information of the target terminals, the area indication information #1, and the application identifier) included in the request message #1. The method procedure shown in FIG. 4A and FIG. 4B further includes:

S412: The terminal management function network element determines an AMF and a RAN.

For example, the terminal management function network element determines an AMF and a RAN corresponding to the AMF based on the identification information of the target terminals, the area indication information #1, and the application identifier. For example, the terminal management function network element determines a corresponding RAN or AMF based on the area indication information #1 (for example, a cell identity), or determines, based on the identification information of the target terminals, a RAN or an AMF corresponding to the identification information.

In this embodiment of this application, the RAN is a RAN having a terminal inventory function.

Further, after determining the AMF, the terminal management function network element may send a request message #2 to the AMF. The method procedure shown in FIG. 4A and FIG. 4B further includes:
S413: The terminal management function network element sends a request message #2 to the AMF, or the AMF receives a request message #2 from the terminal management function network element.

The request message #2 is used to request to execute the first operation on the target terminals, and the request message #1 includes the identification information of the target terminals and the indication information of the first operation. The identification information of the target terminals and the indication information of the first operation are described above. Details are not described herein again.

Optionally, the request message #2 further includes second area indication information.

For example, a second area includes an area managed by the AMF. The second area indication information indicating the second area includes 3GPP location information (such as a TA list or a cell list).

It should be noted that when an area provided by the AF (such as the first area indication information that indicates the first area and that is included in the request message #1 received by the terminal management function network element in S412) is a geographical location and/or a municipal location, the terminal management function network element needs to map the first area into a TA list or a cell list.

If the first area is managed by different AMFs, the terminal management function network element needs to send a request message #2 to each AMF. Second area indication information that indicates the second area and that is included in different request messages #2 indicates the second area managed by the different AMFs.

Optionally, the request message #2 further includes the operation parameter. The operation parameter is described above. Details are not described herein again.

Optionally, the request message #2 further includes a notification address #2 and an association identifier #2.

For example, the notification address #2 indicates an address used by the terminal management function network element to receive terminal information and a command execution result, for example, an address of the terminal management function network element.

For example, the association identifier #2 is used to associate the message #2 with a response message #2 for the message #2.

Optionally, the request message #2 further includes at least one of the following: operation interval duration indication information, operation start moment indication information, and operation timeout moment indication information.

Further, a specific AMF may request the RAN to execute the first operation on the target terminals after receiving the request message #2. The method procedure shown in FIG. 4A and FIG. 4B further includes:
S414: The AMF sends a first request message to the RAN, or the RAN receives a first request message from the AMF.

Refer to the description of step S310 in FIG. 3A. Details are not described herein again.

It should be noted that when the second area managed by the AMF covers a plurality of RANs, the AMF sends a first request message to each of the plurality of RANs. Sending a first request message to different RANs is similar to sending a first request message to a specific RAN. A difference is that an area that corresponds to each RAN and that is used to send a query request needs to be determined for different RANs. Details are not described herein again.

Another implementation of step S412 and step S413 may be as follows: The terminal management function network element determines to send a first request message #2 to each RAN, and the terminal management function network element encapsulates the first request message #2 into a message #A, where the message #A further includes identification information of the RAN. After the AMF receives the message #A, the AMF decapsulates the message #A to obtain the first request message #2, encapsulates the first request message #2 in a message #B, and sends the message #B to the RAN corresponding to the identification information of the RAN. It may be understood that the AMF transparently transmits the first request message #2. The first request message #2 is the same as the first request message.

Further, after receiving the first request message, the RAN may store the first request message. The method procedure shown in FIG. 4A and FIG. 4B further includes:
S415: The RAN stores the first request message.

In a possible implementation, the first request message includes operation start moment indication information. When an operation start moment does not arrive, the RAN may not execute inventory, but stores the first request message.

Specifically, when one of the following conditions is met, the RAN executes inventory:
The first request message does not include the operation start moment indication information, the operation start moment arrives, the operation start moment is exceeded, and the like. The method procedure shown in FIG. 4A and FIG. 4B further includes:
S416: The RAN sends a select message to terminals.

Specifically, the RAN sends a radio frequency signal to all terminals within coverage, to provide an excitation signal for the terminals in the coverage area of the RAN, so that terminal devices can send a signal to the RAN. In addition, the RAN sends a select message to the terminals within coverage of the RAN.

Then, the RAN sends a query request to all selected terminals, to obtain the identification information and execution results of the target terminals. The method procedure shown in FIG. 4A and FIG. 4B further includes:
S420: The RAN sends a first query message to the target terminals, or the target terminals receive a first query message from the RAN.
S430: The RAN receives first identification information from a first target terminal, or a first target terminal sends first identification information to the RAN.

Step S420 and step S430 are a random access process of the first terminal, and specific implementation is as follows: The RAN includes a first random number in the first query message, and the selected target terminals locally set a second random number based on the first random number. If a second random number set by one terminal is 0, the terminal sends a third random number to the RAN. If the RAN can correctly receive the third random number, the RAN sends the third random number to the terminal. When the terminal receives the third random number, the terminal determines that random access succeeds. After determining that the random access succeeds, the terminal sends identification information of the terminal to the RAN.

S440: The RAN sends an operation request message to the first target terminal, or the first target terminal receives an operation request message from the RAN.

S441: The first target terminal executes the first operation to obtain a first execution result.

S450: The RAN receives the first execution result from the first target terminal, or the first target terminal sends the first execution result to the RAN.

S460: The RAN sends at least one second query request to the target terminals, or the target terminals receive at least one second query request from the RAN.

A specific process is as follows: The RAN sends a query repeat request to the target terminals, and after receiving the query repeat request, the first target terminal receives exits the inventory process, to be specific, does not respond to an operation request for the target terminals. After receiving the query repeat request, other target terminals initiate a random access process, and one terminal, which is a second target terminal in this embodiment, succeeds in random access. A specific random access process may be as follows: The other target terminals subtract 1 from the previously set second random number, and if the second random number of one target terminal device is reduced to 0, the target terminal sends a fourth random number to the RAN. If the RAN can correctly receive the fourth random number, the RAN sends the fourth random number to the target terminal. When the target terminal receives the fourth random number, the target terminal determines that random access succeeds. When the second target terminal succeeds in random access, identification information of the second target terminal is sent to the RAN.

S470: The RAN receives at least one piece of second identification information from at least one second target terminal, or at least one second target terminal sends at least one piece of second identification information to the RAN.

S480: The RAN sends the operation request message to the at least one second target terminal, or the at least one second target terminal receives the operation request message from the RAN.

S481: The at least one second target terminal executes the first operation to obtain at least one second execution result.

S490: The RAN receives the at least one second execution result from the at least one second target terminal, or the at least one second target terminal sends the at least one second execution result to the RAN.

For a specific query procedure, refer to step S320 to step S390 shown in FIG. 3A and FIG. 3B. Details are not described herein again.

In this embodiment, after receiving the identification information and the execution results of the target terminals, the RAN sends the identification information and the execution results to the terminal management function by using the AMF. It should be understood that, in the two reporting manners shown in FIG. 3A and FIG. 3B, after receiving the identification information and the execution results of the target terminals in this embodiment, the RAN may also report the identification information and the execution results in the following two reporting manners:
Manner 1: For each target terminal, the RAN separately reports the identification information and the execution result of the target terminal.

In the case of the manner 1, the method procedure shown in FIG. 4A and FIG. 4B further includes:
S451: The RAN sends a first message to the AMF.

The first message includes the first identification information, the first execution result, and the notification address #1.

S452: The AMF sends the first message to the terminal management function network element.

S453: The terminal management function network element sends the first message to the AF.

Manner 2: For all the received target terminals, the RAN reports the identification information and the execution results of the target terminals together.

When the RAN determines that inventory of all terminals selected within coverage of the RAN is completed, the method procedure shown in FIG. 4A and FIG. 4B further includes:
S491: The RAN sends a second message to the AMF.

The second message includes identification information of the plurality of terminals and execution results of the plurality of terminals. The plurality of terminals include the first target terminal and the at least one second target terminal.

That the RAN determines that inventory of all terminals selected within coverage of the RAN is completed is specifically as follows: after performing step S480, if the RAN does not receive, within a configured time, a random access request message initiated by any terminal, the RAN determines that inventory of the target terminals within coverage of the RAN is completed (that is, a query is completed or a target operation is completed).

S492: The AMF sends the second message to the terminal management function network element.

S493: The terminal management function network element sends the second message to the AF.

For example, when the terminal management function network element checks that all RANs participating in inventory report the terminal ID and the execution results or a timer expires, the terminal management function network element sends the second message to the AF.

For example, after the inventory ends, the RAN may send first information to the AMF, to notify the AMF that the inventory ends. The method procedure shown in FIG. 4A and FIG. 4B further includes:
S494: The RAN sends first information to the AMF.

In a possible implementation, the terminal management function network element in FIG. 4A and FIG. 4B may be co-located with a NEF, and an action executed by the terminal management function network element may be understood as an action executed by the NEF.

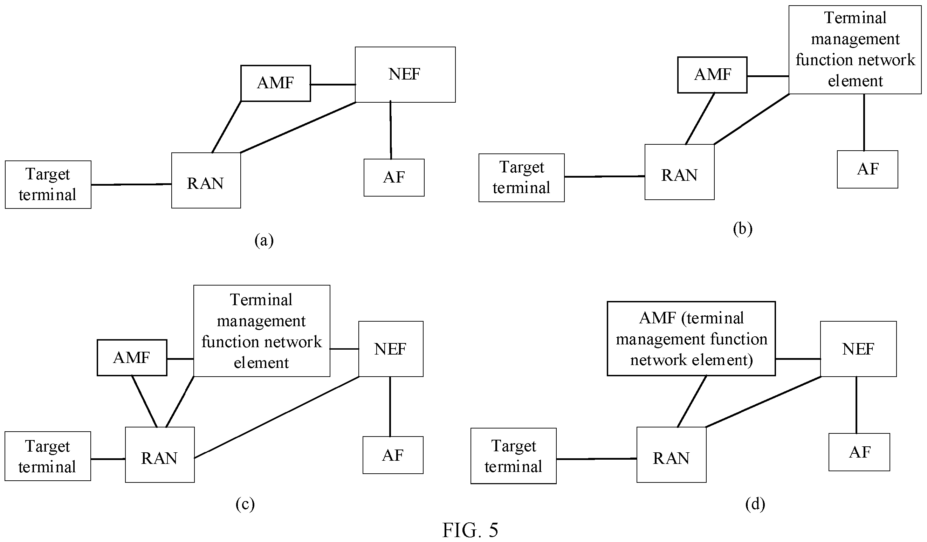

In this implementation, the method procedure shown in FIG. 4A and FIG. 4B may be applied to a network architecture shown in (a) in FIG. 5.

In another possible implementation, the terminal management function network element in FIG. 4A and FIG. 4B may be a newly added independent function network element, and can be configured to forward an inventory request and a response between the AF and the AMF.

In this implementation, the method procedure shown in FIG. 4A and FIG. 4B may be applied to a network architecture shown in (b) in FIG. 5.

In still another possible implementation, the terminal management function network element in FIG. 4A and FIG. 4B may be a newly added independent function network element, and can be configured to forward an inventory request and a response between the NEF and the AMF. In other words, an inventory request and a response between the terminal management function network element and the AF that are shown in FIG. 4A and FIG. 4B need to be forwarded by using the NEF.

In this implementation, the method procedure shown in FIG. 4A and FIG. 4B may be applied to a network architecture shown in (c) in FIG. 5.

In still another possible implementation, the terminal management function network element in FIG. 4A and FIG. 4B may be co-located with the AMF, and interaction between the terminal management function network element and the AMF may be understood as internal interaction.

In this implementation, the method procedure shown in FIG. 4A and FIG. 4B may be applied to a network architecture shown in (d) in FIG. 5.

The method information shown in FIG. 4A and FIG. 4B describes a procedure in which the RAN reports an inventory result by using the AMF and the terminal management function network element.

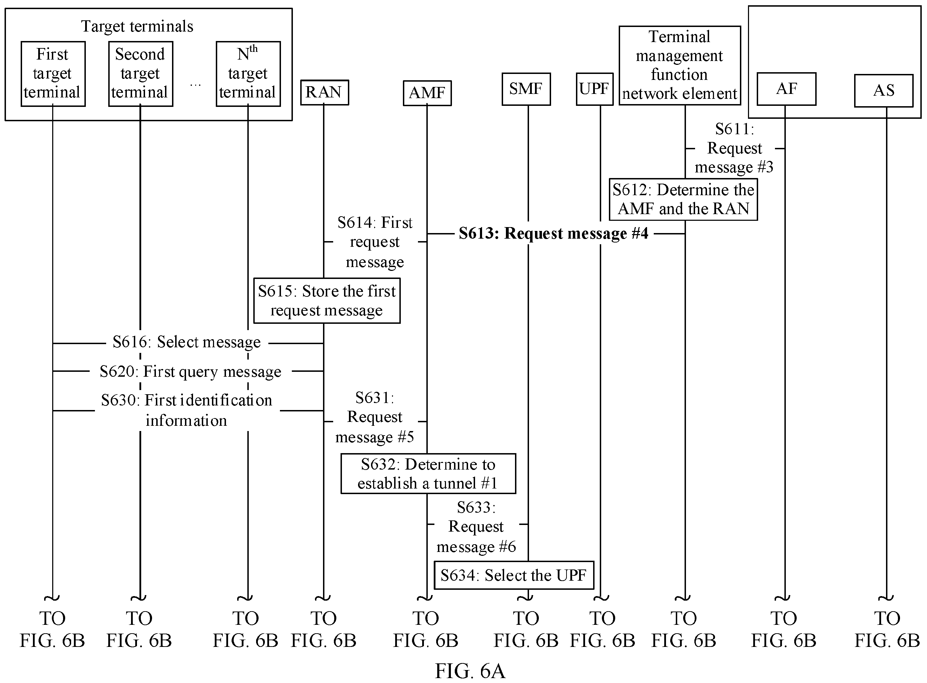

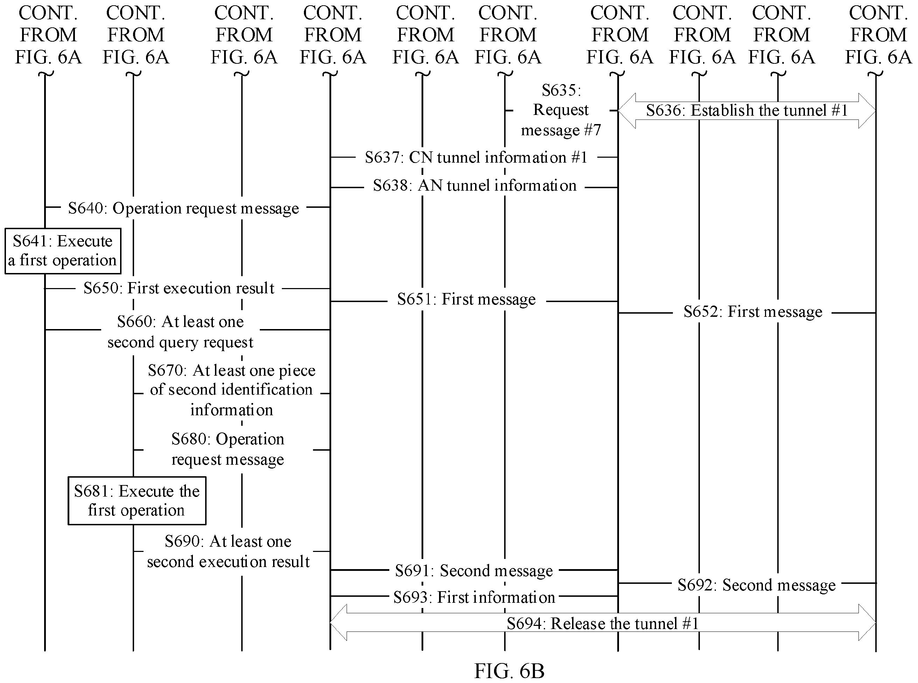

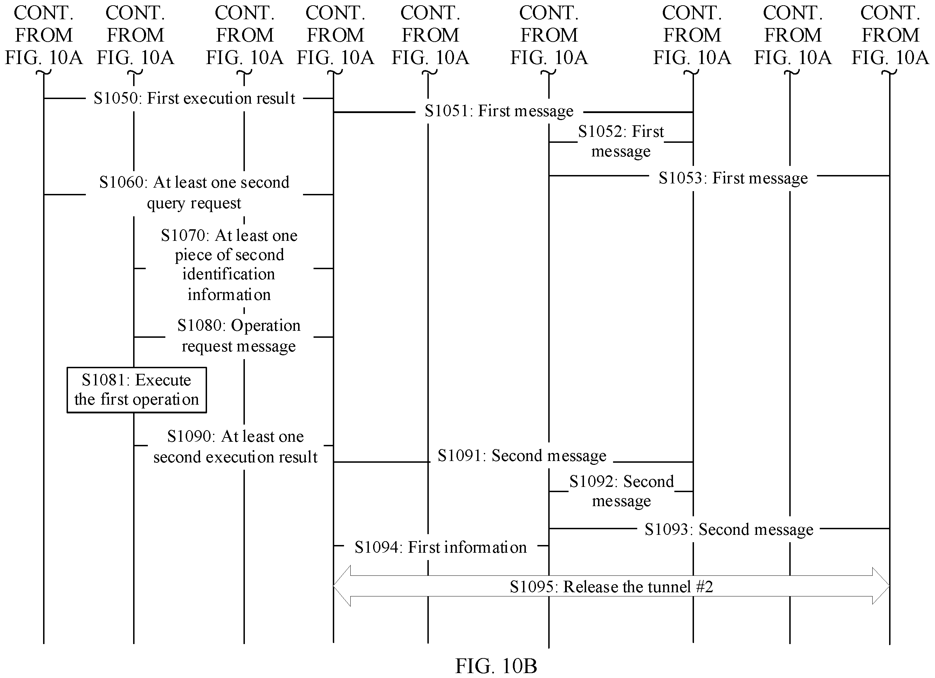

For example, the RAN may further report an inventory result through a tunnel. The following describes in detail a procedure in which an inventory result is reported through a tunnel with reference to FIG. 6A and FIG. 6B to FIG. 10A and FIG. 10B.

The following embodiment in FIG. 6A and FIG. 6B is another specific implementation of the embodiment in FIG. 3A and FIG. 3B. FIG. 6A and FIG. 6B are a schematic flowchart of another communication method according to an embodiment of this application. The following describes the communication method in detail in combination with the steps.

S611: An AF of an application sends a request message #3 to a terminal management function network element, or a terminal management function network element receives a request message #3 from an AF.

Specifically, the request message #3 is similar to the request message #1 shown in S411. For example, the request message #3 is used to request to execute a first operation on target terminals, and includes identification information of the target terminals, indication information of the first operation, and information about the application.

For another example, the request message #3 includes at least one of the following: an operation parameter, first area indication information, operation interval duration indication information, operation start moment indication information, and operation timeout moment indication information.

A difference lies in that in this embodiment, a RAN subsequently reports an inventory result through a tunnel #1 (establishment and use of the tunnel #1 are described below), and the request message #3 may not need to include the notification address #1 and the association identifier #1. The tunnel #1 is one type of the first tunnel described in FIG. 3A and FIG. 3B.

In addition, a difference lies in that the request message #3 may include AS tunnel information (which may also be referred to as second tunnel information), and the AS tunnel information indicates a user plane address used by the application network element to receive information.

S612: The terminal management function network element determines an AMF and a RAN.

Refer to the description of step S412 in FIG. 4A. Details are not described herein again.

Further, after determining the AMF, the terminal management function network element may send a request message #4 to the AMF. The method procedure shown in FIG. 6A and FIG. 6B further includes:
S613: The terminal management function network element sends a request message #4 to the AMF, or the AMF receives a request message #4 from the terminal management function network element.

Specifically, the request message #4 is similar to the request message #2 shown in S413. For example, the request message #4 is used to request to execute the first operation on the target terminals, and includes the identification information of the target terminals, the indication information of the first operation, and the information about the application.

For another example, the request message #4 includes at least one of the following: the operation parameter, second area indication information, the operation interval duration indication information, the operation start moment indication information, and the operation timeout moment indication information.

A difference lies in that the request message #4 may not need to include the notification address #2 and the association identifier #2.

In addition, a difference lies in that the request message #4 may include the AS tunnel information, and may further include configuration indication information (an inventory identifier). The configuration indication information indicates an inventory request (or configuration), and is used to associate information subsequently reported by the RAN with the inventory request.

Further, a specific AMF may request the RAN to execute the first operation on the target terminals after receiving the request message #4. The method procedure shown in FIG. 6A and FIG. 6B further includes:
S614: The AMF sends a first request message to the RAN, or the RAN receives a first request message from the AMF.

Refer to the description of step S414 in FIG. 4A. Details are not described herein again.

Optionally, in this embodiment, the first request message may further include the configuration indication information.

S615: The RAN stores the first request message.

Refer to the description of step S415 in FIG. 4A. Details are not described herein again.

S616: The RAN sends a select message to terminals.

Refer to the description of step S416 in FIG. 4A. Details are not described herein again.

S620: The RAN sends a first query message to the target terminals, or the target terminals receive a first query message from the RAN.

Refer to the description of step S320 in FIG. 3A. Details are not described herein again.

S630: The RAN receives first identification information from a first target terminal, or a first target terminal sends first identification information to the RAN.

Refer to the description of step S330 in FIG. 3A. Details are not described herein again.

In this embodiment, after receiving the first identification information of the first target terminal, the RAN determines that there is information that needs to be reported, and triggers establishment of the tunnel #1, to facilitate subsequent reporting of an inventory result. The method procedure shown in FIG. 6A and FIG. 6B further includes:
S631: The RAN sends a request message #5 to the AMF, or the AMF receives a request message #5 from the RAN.

The request message #5 is used to request to report information.

Specifically, the request message #5 includes the configuration indication information.

Further, after receiving the request message #5, the AMF determines that the tunnel #1 needs to be established. The method procedure shown in FIG. 6A and FIG. 6B further includes:
S632: The AMF needs to determine to establish the tunnel #1.

Specifically, the AMF determines, based on information such as an application identifier, that the user plane tunnel #1 needs to be established, to transmit an inventory result.

S633: The AMF sends a request message #6 to an SMF, or an SMF receives a request message #6 from the AMF.

The request message #6 is used to request to establish the tunnel #1, and the request message #6 includes the application identifier.

Optionally, the request message #6 further includes the AS tunnel information.

S634: The SMF selects a UPF.

Specifically, the SMF selects a proper UPF based on the application identifier.

After selecting the proper UPF, the SMF sends, to the UPF, a request message for requesting to establish a tunnel. The method procedure shown in FIG. 6A and FIG. 6B further includes:
S635: The SMF sends a request message #7 to the UPF, or the UPF receives a request message #7 from the SMF.

The request message #7 is used to request to establish the tunnel #1, and the request message #7 includes the AS tunnel information.

In a possible implementation, the AS tunnel information is reported by the AMF. For example, the request message #6 includes the AS tunnel information.

In another possible implementation, the AS tunnel information is determined by the SMF based on a configuration. The SMF stores AS tunnel information corresponding to the identification information of the target terminals or the first area indication information.

After receiving the request message #7, the UPF may establish the tunnel #1 between the UPF and an AS. The method procedure shown in FIG. 6A and FIG. 6B further includes:
S636: Establish the tunnel #1.

Further, after the tunnel #1 is established, the UPF needs to notify the RAN of information related to the tunnel #1 by using the SMF and the AMF. The method procedure shown in FIG. 6A and FIG. 6B further includes:
S637: The UPF sends CN tunnel information #1 to the RAN, or the RAN receives CN tunnel information #1 from the UPF.

The CN tunnel information #1 indicates a tunnel endpoint used by the UPF to receive uplink data. The CN tunnel information #1 is one type of the first tunnel information in the embodiment shown in FIG. 3A and FIG. 3B.

Specifically, that the UPF sends CN tunnel information #1 to the RAN includes:
The UPF sends, to the SMF, a response message #7 used to respond to the request message #7, where the response message #7 includes the CN tunnel information #1; the SMF sends, to the AMF, a response message #6 used to respond to the request message #6, where the response message #6 includes the CN tunnel information #1; and the AMF sends, to the RAN, a response message #5 used to respond to the request message #5, to notify the RAN that the inventory result may be reported by using the tunnel #1, where the response message #5 includes the CN tunnel information #1.

Optionally, the RAN may report AN tunnel information to the UPF by using the AMF and the SMF. The AN tunnel information indicates a tunnel endpoint used by the RAN to receive downlink data. The method procedure shown in FIG. 6A and FIG. 6B further includes:
S638: The RAN sends AN tunnel information to the UPF, or the UPF receives AN tunnel information from the RAN.

The AN tunnel information indicates a tunnel endpoint used by the RAN to receive downlink data.
A process of establishing the tunnel #1 is described in detail in S631 to S6391. After the tunnel #1 is established, the RAN may report inventory information by using the tunnel #1. The method procedure shown in FIG. 6A and FIG. 6B further includes:
S640: The RAN sends an operation request message to the first target terminal, or the first target terminal receives an operation request message from the RAN.
S641: The first target terminal executes the first operation to obtain a first execution result.
S650: The RAN receives the first execution result from the first target terminal, or the first target terminal sends the first execution result to the RAN.
S660: The RAN sends at least one second query request to the target terminals, or the target terminals receive at least one second query request from the RAN.
S670: The RAN receives at least one piece of second identification information from at least one second target terminal, or at least one second target terminal sends at least one piece of second identification information to the RAN.
S680: The RAN sends the operation request message to the at least one second target terminal, or the at least one second target terminal receives the operation request message from the RAN.
S681: The at least one second target terminal executes the first operation to obtain at least one second execution result.
S690: The RAN receives the at least one second execution result from the at least one second target terminal, or the at least one second target terminal sends the at least one second execution result to the RAN.

For a specific query procedure, refer to step S340 to step S390 shown in FIG. 3A and FIG. 3B. Details are not described herein again.

In this embodiment, after receiving the identification information and the execution results of the target terminals, the RAN sends the identification information and the execution results to the AS through a tunnel. It should be understood that, in the two reporting manners shown in FIG. 3A and FIG. 3B, after receiving the identification information and the execution results of the target terminals in this embodiment, the RAN may also report the identification information and the execution results in the following two reporting manners:
Manner 1: For each target terminal, the RAN separately reports the identification information and the execution result of the target terminal.

In the case of the manner 1, the method procedure shown in FIG. 6A and FIG. 6B further includes:
S651: The RAN sends a first message to the UPF through a tunnel.

Specifically, the RAN sends the first message to the UPF based on the CN tunnel information #1.

The first message includes the first identification information, the first execution result, and the notification address #1.

S652: The UPF sends the first message to the AS.

Specifically, the UPF sends the first message to the AS based on the AS tunnel information.

Manner 2: For all the target terminals, the RAN reports the identification information and the execution results of the target terminals together.

When the RAN determines that inventory of all selected terminals is completed, the method procedure shown in FIG. 6A and FIG. 6B further includes:
S691: The RAN sends a second message to the UPF through a tunnel.

Specifically, the RAN sends the second message to the UPF based on the CN tunnel information #1.

The second message includes identification information of the plurality of terminals and execution results of the plurality of terminals. The plurality of terminals include the first target terminal and the at least one second target terminal.

S692: The UPF sends the second message to the AS through a tunnel.

Specifically, the UPF sends the second message to the AS based on the AS tunnel information.

In a possible implementation, after determining that the inventory ends, the RAN may indicate, to a terminal management function network element-UP, that the inventory ends. The method procedure shown in FIG. 6A and FIG. 6B further includes:
S693: The RAN sends first information to the UPF through a tunnel.

The first information indicates that the inventory ends.

S694: The UPF initiates tunnel release.

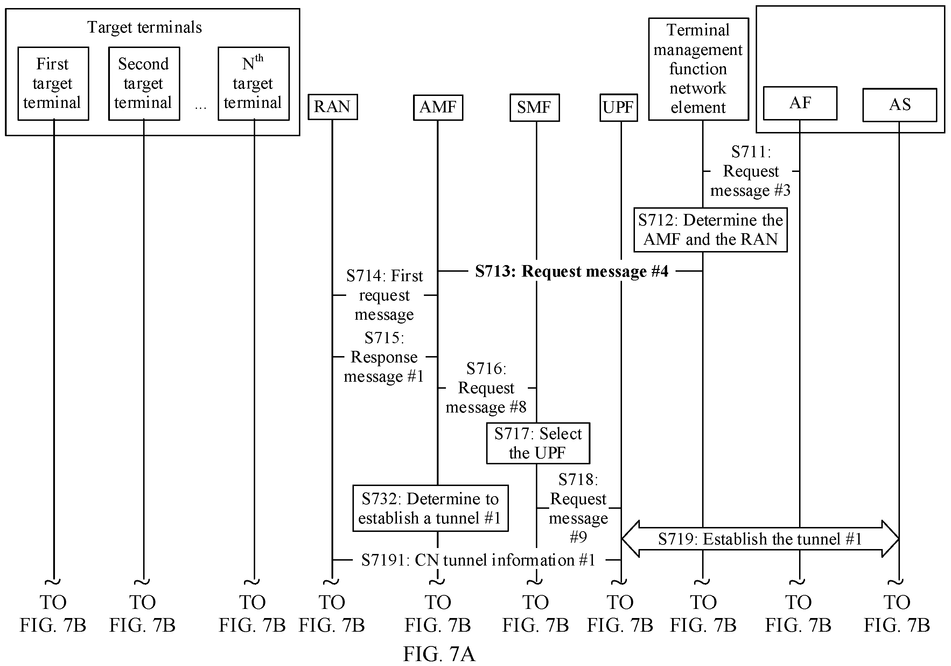

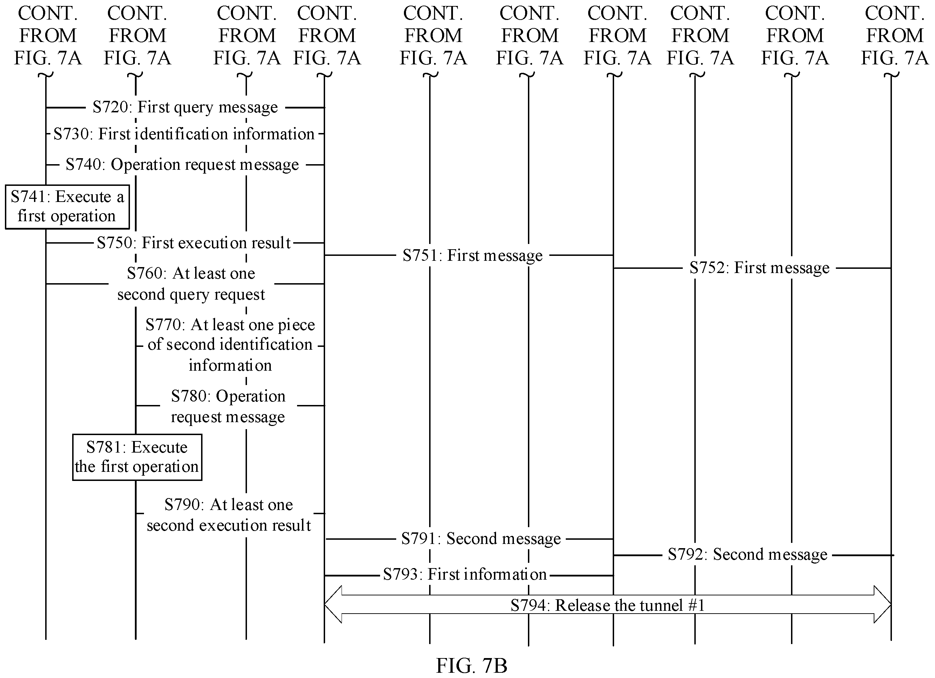

It can be learned from the method procedure shown in FIG. 6A and FIG. 6B that, establishment of a tunnel is initiated after the RAN receives the identification information of the target terminals (for example, establishment of the tunnel #1 is initiated through the request message #5). In a possible implementation, establishment of a tunnel may alternatively be initiated after the RAN receives an inventory request. It may be understood that the establishment is initiated by the terminal management function network element. The following describes a procedure in which establishment of a tunnel is initiated by the terminal management function network element with reference to FIG. 7A and FIG. 7B.

The following embodiment in FIG. 7A and FIG. 7B is still another specific implementation of the embodiment in FIG. 3A and FIG. 3B. FIG. 7A and FIG. 7B are a schematic flowchart of still another communication method according to this application. The following describes the communication method in detail in combination with the steps.

S711: An AF of an application sends a request message #3 to a terminal management function network element, or a terminal management function network element receives a request message #3 from an AF.

Refer to the description of step S611 in FIG. 6A. Details are not described herein again.

S712: The terminal management function network element determines an AMF and a RAN.

Refer to the description of step S412 in FIG. 4A. Details are not described herein again.

S713: The terminal management function network element sends a request message #4 to the AMF, or the AMF receives a request message #4 from the terminal management function network element.

Refer to the description of step S613 in FIG. 6A. Details are not described herein again.

S714: The AMF sends a first request message to the RAN, or the RAN receives a first request message from the AMF.

Refer to the description of step S414 in FIG. 4A. Details are not described herein again.

In this embodiment, after receiving the first request message, the RAN may send a response message #1 to the AMF. The method procedure shown in FIG. 7A and FIG. 7B further includes:
S715: The RAN sends a response message #1 to the AMF, or the AMF receives a response message #1 from the RAN.

The response message #1 (such as an inventory response message) includes AN tunnel information.

S716: The AMF sends a request message #8 to an SMF, or an SMF receives a request message #8 from the AMF.

The request message #8 is used to request to establish a tunnel, and the request message #6 includes an application identifier and the AN tunnel information.

Optionally, the request message #8 further includes AS tunnel information.

S717: The SMF selects a UPF.

Refer to the description of step S634 in FIG. 6A. Details are not described herein again.

S718: The SMF sends a request message #9 to the UPF, or the UPF receives a request message #9 from the SMF.

The request message #9 is used to request to establish a tunnel, and the request message #9 includes the AN tunnel information and the AS tunnel information.

In a possible implementation, the AS tunnel information is reported by the AMF. For example, the request message #8 includes the AS tunnel information.

In another possible implementation, the AS tunnel information is determined by the SMF based on a configuration. The SMF stores AS tunnel information corresponding to identification information of target terminals or first area indication information.

After receiving the request message #9, the UPF may establish a tunnel between the UPF and an AS. The method procedure shown in FIG. 7A and FIG. 7B further includes:
S719: Establish a tunnel.

Further, after the tunnel is established, the UPF needs to send, to the RAN, information related to the tunnel by using the SMF and the AMF. The method procedure shown in FIG. 7A and FIG. 7B further includes:
S7191: The UPF sends CN tunnel information #1 to the RAN, or the RAN receives CN tunnel information #1 from the UPF.

Specifically, that the UPF sends CN tunnel information #1 to the RAN may be as follows:
The UPF sends, to the SMF, a response message #9 in response to the request message #9, where the response message #9 includes the CN tunnel information #1; the SMF sends, to the AMF, a response message #8 in response to the request message #8, where the response message #8 includes the CN tunnel information #1; and the AMF sends the CN tunnel information #1 (such as an inventory request completion message) to the RAN.

A procedure of establishing a tunnel is described in the foregoing step S711 to step S7191, and subsequently, the RAN may report an inventory result through the tunnel.

In this embodiment, after receiving the CN tunnel information #1, the RAN may execute an inventory procedure, which specifically includes the following steps:
S720: The RAN sends a first query message to the target terminals, or the target terminals receive a first query message from the RAN.
S730: The RAN receives first identification information from a first target terminal, or a first target terminal sends first identification information to the RAN.
S740: The RAN sends an operation request message to the first target terminal, or the first target terminal receives an operation request message from the RAN.
S741: The first target terminal executes a first operation to obtain a first execution result.
S750: The RAN receives the first execution result from the first target terminal, or the first target terminal sends the first execution result to the RAN.
S760: The RAN sends at least one second query request to the target terminals, or the target terminals receive at least one second query request from the RAN.
S770: The RAN receives at least one piece of second identification information from at least one second target terminal, or at least one second target terminal sends at least one piece of second identification information to the RAN.
S780: The RAN sends the operation request message to the at least one second target terminal, or the at least one second target terminal receives the operation request message from the RAN.
S781: The at least one second target terminal executes the first operation to obtain at least one second execution result.
S790: The RAN receives the at least one second execution result from the at least one second target terminal, or the at least one second target terminal sends the at least one second execution result to the RAN.

For a specific query procedure, refer to step S320 to step S390 shown in FIG. 3A and FIG. 3B. Details are not described herein again.

In this embodiment, after receiving the identification information and the execution results of the target terminals, the RAN sends the identification information and the execution results to the AS through a tunnel. It should be understood that, in the two reporting manners shown in FIG. 3A and FIG. 3B, after receiving the identification information and the execution results of the target terminals in this embodiment, the RAN may also report the identification information and the execution results in the following two reporting manners:
Manner 1: For each target terminal, the RAN separately reports the identification information and the execution result of the target terminal.

In the case of the manner 1, the method procedure shown in FIG. 7A and FIG. 7B further includes:
S751: The RAN sends a first message to the UPF through a tunnel.

Specifically, the RAN sends the first message to the UPF based on the CN tunnel information #1.

The first message includes the first identification information, the first execution result, and a notification address #1.

S752: The UPF sends the first message to the AS.

Specifically, the UPF sends the first message to the AS based on the AS tunnel information.

Manner 2: For all the target terminals, the RAN reports the identification information and the execution results of the target terminals together.

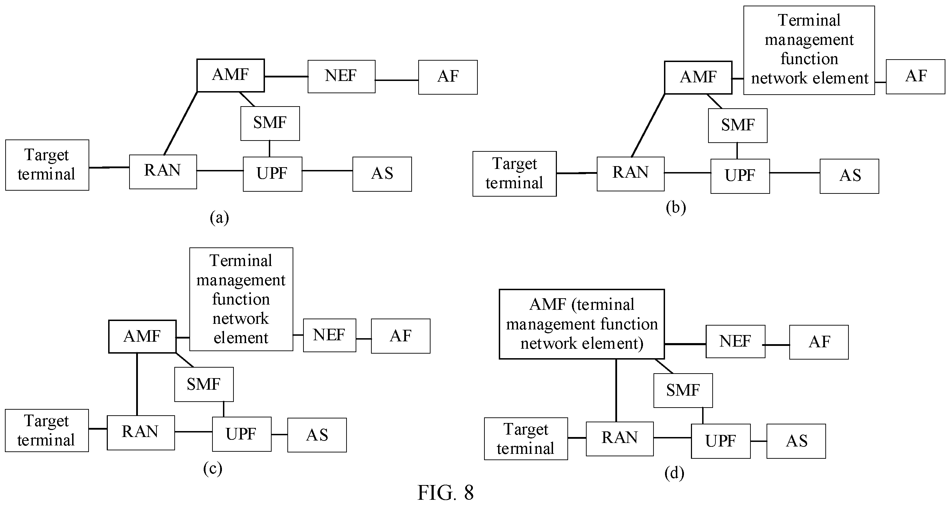

When the RAN determines that inventory of all selected terminals is completed, the method procedure shown in FIG. 8 further includes:
S791: The RAN sends a second message to the UPF through a tunnel.

Specifically, the RAN sends the second message to the UPF based on the CN tunnel information #1.

The second message includes identification information of the plurality of terminals and execution results of the plurality of terminals. The plurality of terminals include the first target terminal and the at least one second target terminal.

S792: The UPF sends the second message to the AS through a tunnel.

Specifically, the UPF sends the second message to the AS based on the AS tunnel information.

In a possible implementation, after determining that the inventory ends, the RAN may indicate, to a terminal management function network element-UP, that the inventory ends. The method procedure shown in FIG. 7A and FIG. 7B further includes:
S793: The RAN sends first information to the UPF through a tunnel.

The first information indicates that the inventory ends.

S794: The UPF initiates tunnel release.

In a possible implementation, the terminal management function network element in FIG. 6A and FIG. 6B, and FIG. 7A and FIG. 7B may be co-located with a NEF, and an action executed by the terminal management function network element may be understood as an action executed by the NEF.

In this implementation, the method procedures shown in FIG. 6A and FIG. 6B, and FIG. 7A and FIG. 7B may be applied to a network architecture shown in (a) in FIG. 8.

In another possible implementation, the terminal management function network element in FIG. 6A and FIG. 6B, and FIG. 7A and FIG. 7B may be a newly added independent function network element, and can be configured to forward an inventory request and a response between the AF and the AMF.

In this implementation, the method procedures shown in FIG. 6A and FIG. 6B, and FIG. 7A and FIG. 7B may be applied to a network architecture shown in (b) in FIG. 8.

In still another possible implementation, the terminal management function network element in FIG. 6A and FIG. 6B, and FIG. 7A and FIG. 7B may be a newly added independent function network element, and can be configured to forward an inventory request and a response between the NEF and the AMF. In other words, an inventory request and a response between the terminal management function network element and the AF that are shown in FIG. 4A and FIG. 4B need to be forwarded by using the NEF.

In this implementation, the method procedures shown in FIG. 6A and FIG. 6B, and FIG. 7A and FIG. 7B may be applied to a network architecture shown in (c) in FIG. 8.

In still another possible implementation, the terminal management function network element in FIG. 6A and FIG. 6B, and FIG. 7A and FIG. 7B may be co-located with the AMF, and interaction between the AMF and the terminal management function network element may be considered as internal interaction.

In this implementation, the method procedures shown in FIG. 6A and FIG. 6B, and FIG. 7A and FIG. 7B may be applied to a network architecture shown in (d) in FIG. 8.

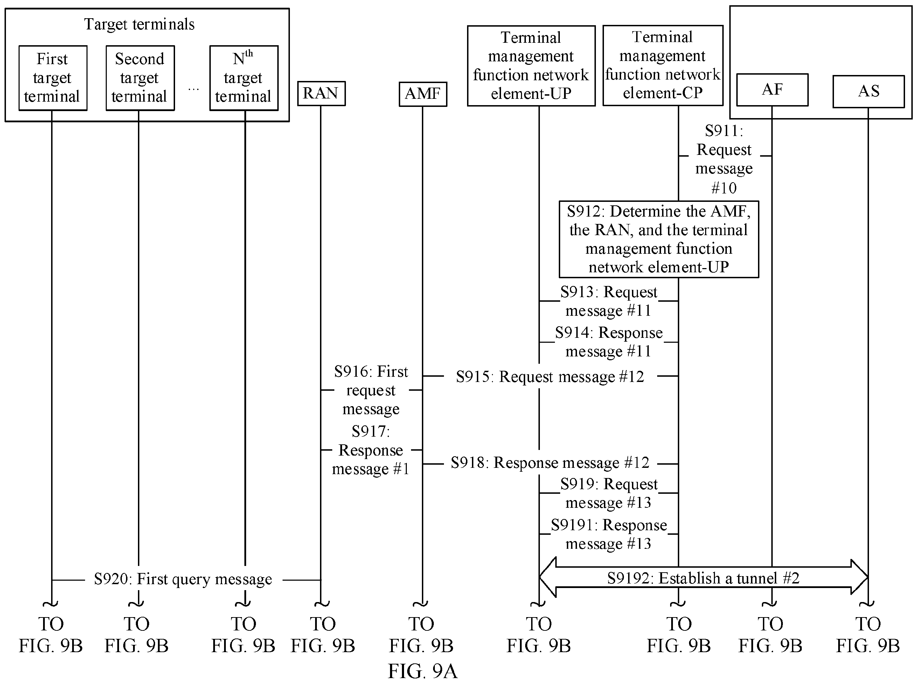

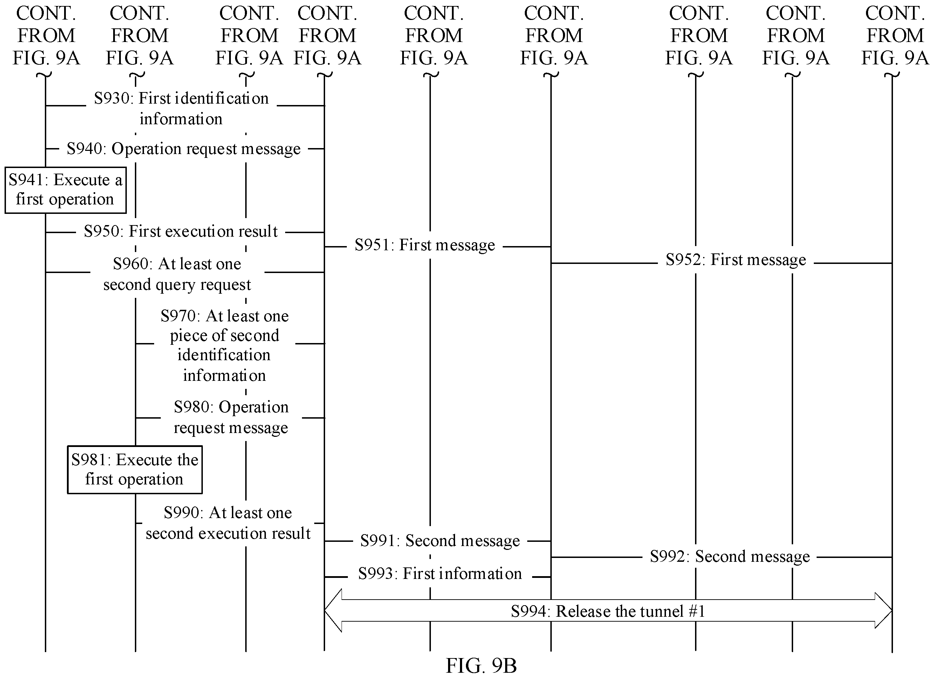

It can be learned from the foregoing method procedure shown in FIG. 7A and FIG. 7B that establishment of a tunnel is initiated by the terminal management function network element. In a possible implementation, establishment of a tunnel is initiated by a terminal management control plane function network element. The following describes a procedure in which establishment of a tunnel is initiated by a terminal management function network element-CP with reference to FIG. 9A and FIG. 9B.

The following embodiment in FIG. 9A and FIG. 9B is still another specific implementation of the embodiment in FIG. 3A and FIG. 3B. FIG. 9A and FIG. 9B are a schematic flowchart of still another communication method according to this application. The following describes the communication method in detail in combination with the steps.

S911: An AF of an application sends a request message #10 to a terminal management function network element-CP, or a terminal management function network element-CP receives a request message #10 from an AF.

Content included in the request message #10 (which may also be referred to as a third request message) is the same as that included in the request message #3. Details are not described herein again.

S912: The terminal management function network element-CP determines an AMF, a RAN, and a terminal management function network element-UP.

For example, the terminal management function network element-CP determines the AMF and the RAN based on information such as an application identifier and identification information of target terminals. For a specific determining manner, refer to the description of step S412 in FIG. 4A. Details are not described herein again.

In this embodiment, the terminal management function network element-CP further needs to determine the terminal management function network element-UP based on information such as the application identifier. The terminal management function network element-CP stores a correspondence between an application identifier and a terminal management function network element.

After determining the terminal management function network element-UP, the terminal management function network element-CP may obtain tunnel information from the terminal management function network element-UP. The method procedure shown in FIG. 9A and FIG. 9B further includes:

S913: The terminal management function network element-CP sends a request message #11 to the terminal management function network element-UP, or the terminal management function network element-UP receives a request message #11 from the terminal management function network element-CP.

The request message #11 (such as a tunnel information request, which may also be referred to as a fourth request message) is used to request to obtain tunnel information. Specifically, the request message #11 includes AS tunnel information.

In a possible implementation, the AS tunnel information is provided by the AF. For example, the request message #10 includes the AS tunnel information.

In another possible implementation, the AS tunnel information is determined by the terminal management function network element-CP based on a configuration.

S914: The terminal management function network element-UP sends a response message #11 to the terminal management function network element-CP, or the terminal management function network element-UP receives a response message #11 from the terminal management function network element-CP.

The response message #11 (such as a tunnel information response) is used to respond to the request message #11. Specifically, the response message #11 includes CN tunnel information #2 (which may also be referred to as first tunnel information), and the CN tunnel information #2 is a tunnel endpoint used by the terminal management function network element-UP to receive uplink data.

S915: The terminal management function network element-CP sends a request message #12 to the AMF, or the AMF receives a request message #12 from the terminal management function network element.

Content included in the request message #12 is the same as that included in the request message #2. For example, the request message #12 is used to request to execute a first operation on the target terminals, and includes the identification information of the target terminals, indication information of the first operation, and information about the application.

For another example, the request message #12 includes at least one of the following: an operation parameter, second area indication information, operation interval duration indication information, operation start moment indication information, and operation timeout moment indication information.

A difference lies in that in this embodiment, the RAN subsequently reports an inventory result through a tunnel (establishment and use of the tunnel are described below), and the request message #12 may not need to include the notification address #2 and the association identifier #2.

In addition, a difference lies in that the request message #12 includes the CN tunnel information #2.

S916: The AMF sends a first request message to the RAN, or the RAN receives a first request message from the AMF.

Refer to the description of step S414 in FIG. 4A. Details are not described herein again.

Specifically, the first request message further includes the CN tunnel information #2 in this embodiment.

S917: The RAN sends a response message #1 to the AMF, or the AMF receives a response message #1 from the RAN.

Refer to the description of step S715 in FIG. 7A. Details are not described herein again.

S918: The AMF sends a response message #12 to the terminal management function network element-CP, or the terminal management function network element-CP receives a response message #12 from the AMF.

The response message #12 responds to the request message #12, and the response message #12 includes the application identifier and AN tunnel information.

S919: The terminal management function network element-CP sends a request message #13 to the terminal management function network element-UP, or the terminal management function network element-UP receives a request message #13 from the terminal management function network element-CP.

The request message #13 is used to request to update tunnel information, and the request message #13 includes the AN tunnel information.

S9191: The terminal management function network element-UP sends a response message #13 to the terminal management function network element-CP, or the terminal management function network element-UP receives a response message #13 from the terminal management function network element-CP.

The response message #11 (such as a tunnel information response) is used to respond to the request message #13.

After the terminal management function network element-UP receives the request message #13, a tunnel #2 between the terminal management function network element-UP and an AS may be established. The method procedure shown in FIG. 9A and FIG. 9B further includes:
S9192: Establish the tunnel #2.

A procedure of establishing the tunnel #2 is described in the foregoing step S911 to step S9192, and subsequently, the RAN may report an inventory result through the tunnel #2.

The following describes an inventory procedure of the RAN, which specifically includes the following steps:
S920: The RAN sends a first query message to the target terminals, or the target terminals receive a first query message from the RAN.
S930: The RAN receives first identification information from a first target terminal, or a first target terminal sends first identification information to the RAN.
S940: The RAN sends an operation request message to the first target terminal, or the target terminal receives an operation request message from the RAN.
S941: The first target terminal executes the first operation to obtain a first execution result.
S950: The RAN receives the first execution result from the first target terminal, or the first target terminal sends the first execution result to the RAN.
S960: The RAN sends at least one second query request to the target terminals, or the target terminals receive at least one second query request from the RAN.
S970: The RAN receives at least one piece of second identification information from at least one second target terminal, or at least one second target terminal sends at least one piece of second identification information to the RAN.
S980: The RAN sends the operation request message to the at least one second target terminal, or the at least one second target terminal receives the operation request message from the RAN.
S981: The at least one second target terminal executes the first operation to obtain at least one second execution result.
S990: The RAN receives the at least one second execution result from the at least one second target terminal, or the at least one second target terminal sends the at least one second execution result to the RAN.

For a specific query procedure, refer to step S320 to step S390 shown in FIG. 3A and FIG. 3B. Details are not described herein again.

In this embodiment, after receiving the identification information and the execution results of the target terminals, the RAN sends the identification information and the execution results to the AS through a tunnel. It should be understood that, in the two reporting manners shown in FIG. 3A and FIG. 3B, after receiving the identification information and the execution results of the target terminals in this embodiment, the RAN may also report the identification information and the execution results in the following two reporting manners:
Manner 1: For each target terminal, the RAN separately reports the identification information and the execution result of the target terminal.

In the case of the manner 1, the method procedure shown in FIG. 9A and FIG. 9B further includes:
S951: The RAN sends a first message to the terminal management function network element-UP through a tunnel.

Specifically, the RAN sends the first message to the UPF based on CN tunnel information #1.

The first message includes the first identification information, the first execution result, and a notification address #1.

S952: The terminal management function network element-UP sends the first message to the AS.

Specifically, the UPF sends the first message to the AS based on the AS tunnel information.

Manner 2: For all the target terminals, the RAN reports the identification information and the execution results of the target terminals together.

When the RAN determines that inventory of all selected terminals is completed, the method procedure shown in FIG. 8 further includes:
S991: The RAN sends a second message to the terminal management function network element-UP through a tunnel.

Specifically, the RAN sends the second message to the UPF based on the CN tunnel information #1.

The second message includes identification information of the plurality of terminals and execution results of the plurality of terminals. The plurality of terminals include the first target terminal and the at least one second target terminal.

S992: The terminal management function network element-UP sends the second message to the AS through a tunnel.

Specifically, the UPF sends the second message to the AS based on the AS tunnel information.

In a possible implementation, after determining that the inventory ends, the RAN may indicate, to the terminal management function network element-UP, that the inventory ends. The method procedure shown in FIG. 9A and FIG. 9B further includes:
S993: The RAN sends first information to the terminal management function network element-UP through a tunnel.

The first information indicates that the inventory ends.

S994: The terminal management function network element-UP initiates tunnel release.

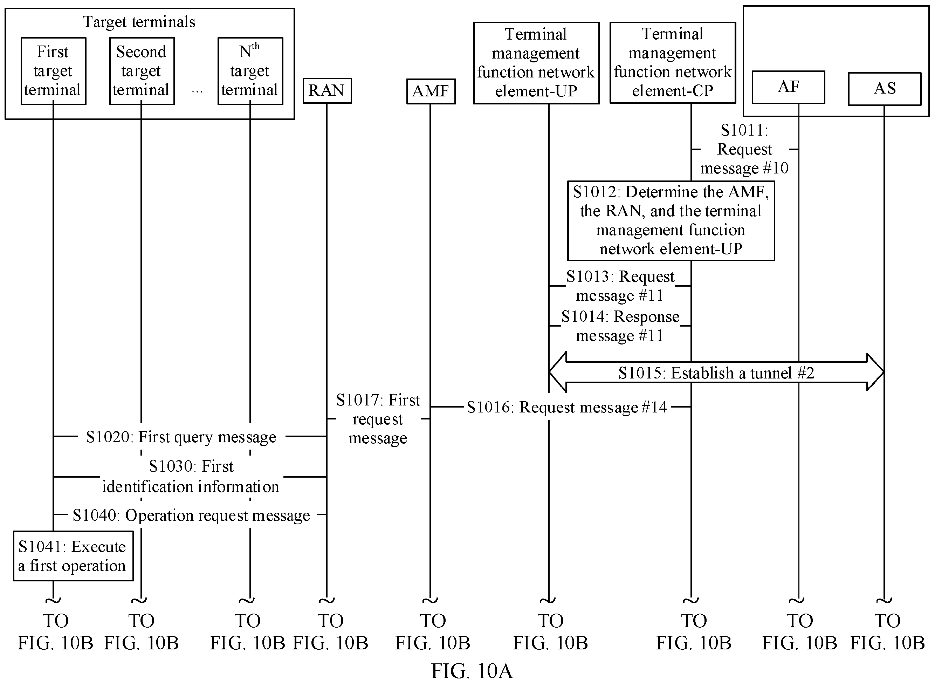

It can be learned from the method procedure shown in FIG. 9A and FIG. 9B that when reporting an inventory result, the RAN reports the inventory result to the AF by using the terminal management function network element-UP. In a possible implementation, when reporting an inventory result, the RAN may send the inventory result to the terminal management function network element-UP by using the terminal management function network element-CP. The following describes this implementation with reference to FIG. 10A and FIG. 10B.

The following embodiment in FIG. 10A and FIG. 10B is still another specific implementation of the embodiment in FIG. 3A and FIG. 3B. FIG. 10A and FIG. 10B are a schematic flowchart of still another communication method according to this application. The following describes the communication method in detail in combination with the steps.

S1011: An AF of an application sends a request message #10 to a terminal management function network element-CP, or a terminal management function network element-CP receives a request message #10 from an AF.

Refer to the description of step S911 in FIG. 9A. Details are not described herein again.

S1012: The terminal management function network element-CP determines an AMF, a RAN, and a terminal management function network element-UP.

Refer to the description of step S912 in FIG. 9A. Details are not described herein again.

S1013: The terminal management function network element-CP sends a request message #11 to the terminal management function network element-UP, or the terminal management function network element-UP receives a request message #11 from the terminal management function network element-CP.

Refer to the description of step S913 in FIG. 9A. Details are not described herein again.

S1014: The terminal management function network element-UP sends a response message #11 to the terminal management function network element-CP, or the terminal management function network element-UP receives a response message #11 from the terminal management function network element-CP.

The response message #11 (such as a tunnel information response) is used to respond to the request message #11.

Different from the response message #11 shown in FIG. 9A, the response message #11 may not include the CN tunnel information #2.

After the terminal management function network element-UP receives a request message #13, a tunnel #2 between the terminal management function network element-UP and an AS may be established. The method procedure shown in FIG. 10A and FIG. 10B further includes:
S1015: Establish the tunnel #2.

A procedure of establishing the tunnel #2 is described in the foregoing step S1011 to step S1015, and subsequently, the RAN may report an inventory result through the tunnel #2.

S1016: The terminal management function network element-CP sends a request message #14 to the AMF, or the AMF receives a request message #14 from the terminal management function network element.

Content included in the request message #14 is the same as that included in the request message #2. For example, the request message #14 is used to request to execute a first operation on target terminals, and includes identification information of the target terminals, indication information of the first operation, and information about the application.

For another example, the request message #14 includes at least one of the following: an operation parameter, second area indication information, operation interval duration indication information, operation start moment indication information, and operation timeout moment indication information.

A difference lies in that in this embodiment, the RAN subsequently reports an inventory result through a tunnel (establishment and use of the tunnel are described below), and the request message #14 may not need to include the notification address #2 and the association identifier #2.

S1017: The AMF sends a first request message to the RAN, or the RAN receives a first request message from the AMF.

Refer to the description of step S414 in FIG. 4A. Details are not described herein again.

S1020: The RAN sends a first query message to the target terminals, or the target terminals receive a first query message from the RAN.

S1030: The RAN receives first identification information from a first target terminal, or a first target terminal sends first identification information to the RAN.

S1040: The RAN sends an operation request message to the first target terminal, or the target terminal receives an operation request message from the RAN.

S1041: The first target terminal executes the first operation to obtain a first execution result.

S1050: The RAN receives the first execution result from the first target terminal, or the first target terminal sends the first execution result to the RAN.

S1060: The RAN sends at least one second query request to the target terminals, or the target terminals receive at least one second query request from the RAN.

S1070: The RAN receives at least one piece of second identification information from at least one second target terminal, or at least one second target terminal sends at least one piece of second identification information to the RAN.

S1080: The RAN sends the operation request message to the at least one second target terminal, or the at least one second target terminal receives the operation request message from the RAN.

S1081: The at least one second target terminal executes the first operation to obtain at least one second execution result.

S1090: The RAN receives the at least one second execution result from the at least one second target terminal, or the at least one second target terminal sends the at least one second execution result to the RAN.

For a specific query procedure, refer to step S320 to step S390 shown in FIG. 3A and FIG. 3B. Details are not described herein again.

In this embodiment, after receiving the identification information and the execution results of the target terminals, the RAN sends the identification information and the execution results to the AS through a tunnel. It should be understood that, in the two reporting manners shown in FIG. 3A and FIG. 3B, after receiving the identification information and the execution results of the target terminals in this embodiment, the RAN may also report the identification information and the execution results in the following two reporting manners:
Manner 1: For each target terminal, the RAN separately reports the identification information and the execution result of the target terminal.

In the case of the manner 1, the method procedure shown in FIG. 10A and FIG. 10B further includes:
S1051: The RAN sends a first message to the terminal management function network element-CP.

The first message includes the first identification information, the first execution result, and a notification address #1.

S1052: The terminal management function network element-CP sends the first message to the terminal management function network element-UP.

S1053: The terminal management function network element-UP sends the first message to the AS through a tunnel.

Specifically, the UPF sends the first message to the AS based on AS tunnel information.

Manner 2: For all the target terminals, the RAN reports the identification information and the execution results of the target terminals together.

When the RAN determines that inventory of all selected terminals is completed, the method procedure shown in FIG. 10A and FIG. 10B further includes:
S1091: The RAN sends a second message to the terminal management function network element-CP.

The second message includes identification information of the plurality of terminals and execution results of the plurality of terminals. The plurality of terminals include the first target terminal and the at least one second target terminal.

S1092: The terminal management function network element-CP sends the second message to the terminal management function network element-UP.

S1093: The terminal management function network element-UP sends the second message to the AS through a tunnel.

Specifically, the UPF sends the second message to the AS based on the AS tunnel information.

In a possible implementation, after determining that the inventory ends, the RAN may indicate, to the terminal management function network element-UP, that the inventory ends. The method procedure shown in FIG. 10A and FIG. 10B further includes:
S1094: The RAN sends first information to the terminal management function network element-CP through a tunnel.

The first information indicates that the inventory ends.

S1095: The terminal management function network element-CP initiates tunnel release.

In a possible implementation, the terminal management function network element in FIG. 9A and FIG. 9B, and FIG. 10A and FIG. 10B may be co-located with a NEF, and an action executed by the terminal management function network element may be understood as an action executed by the NEF.

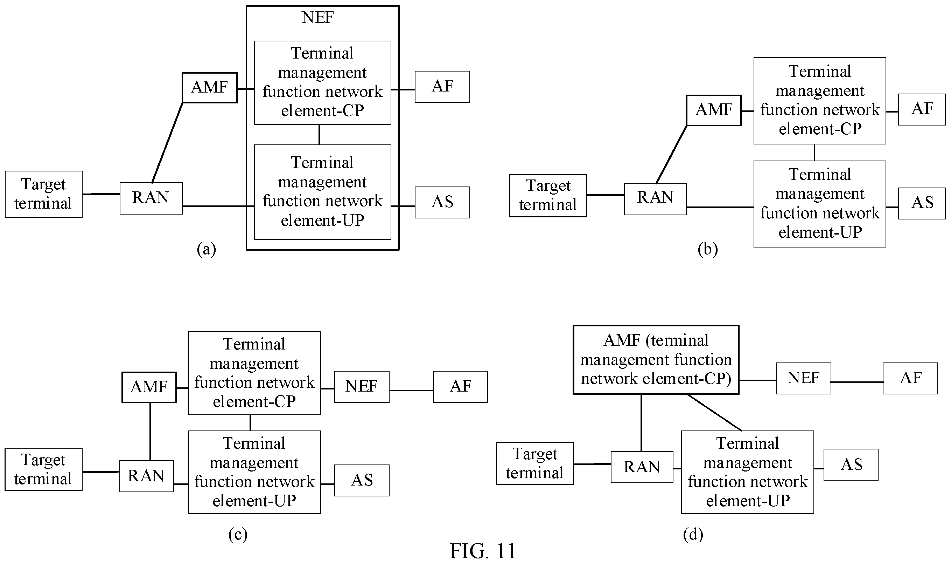

In this implementation, the method procedures shown in FIG. 9A and FIG. 9B, and FIG. 10A and FIG. 10B may be applied to a network architecture shown in (a) in FIG. 11.

In another possible implementation, the terminal management function network element in FIG. 9A and FIG. 9B, and FIG. 10A and FIG. 10B may be a newly added independent function network element, and can be configured to forward an inventory request and a response between the AF and the AMF.

In this implementation, the method procedures shown in FIG. 9A and FIG. 9B, and FIG. 10A and FIG. 10B may be applied to a network architecture shown in (b) in FIG. 11.

In still another possible implementation, the terminal management function network element in FIG. 9A and FIG. 9B, and FIG. 10A and FIG. 10B may be a newly added independent function network element, and can be configured to forward an inventory request and a response between the NEF and the AMF. In other words, an inventory request and a response between the terminal management function network element and the AF that are shown in FIG. 4A and FIG. 4B need to be forwarded by using the NEF.

In this implementation, the method procedures shown in FIG. 9A and FIG. 9B, and FIG. 10A and FIG. 10B may be applied to a network architecture shown in (c) in FIG. 11.

In still another possible implementation, the terminal management function network element in FIG. 9A and FIG. 9B, and FIG. 10A and FIG. 10B may be co-located with the AMF, and interaction between the AMF and the terminal management function network element-CP may be considered as internal interaction.

In this implementation, the method procedures shown in FIG. 9A and FIG. 9B, and FIG. 10A and FIG. 10B may be applied to a network architecture shown in (d) in FIG. 11.

It should be understood that the specific examples shown in FIG. 3A and FIG. 3B to FIG. 11 in embodiments of this application are merely intended to help a person skilled in the art better understand embodiments of this application, but are not intended to limit the scope of embodiments of this application. It should be further understood that the sequence numbers of the foregoing processes do not mean an execution sequence order. The execution order of the processes should be determined based on functions and internal logic of the processes, and should not be construed as any limitation on the implementation processes of embodiments of this application.

It should be further understood that, in embodiments of this application, unless otherwise stated or there is a logic conflict, terms and/or descriptions in different embodiments are consistent and may be mutually referenced, and technical features in different embodiments may be combined based on an internal logical relationship thereof, to form a new embodiment.

It should be further understood that, in some of the foregoing embodiments, a network element (such as an AF, an AMF, an SMF, or the like) in an existing network architecture is mainly used as an example for description. It should be understood that a specific form of the network element is not limited in embodiments of this application. For example, all network elements that can implement a same function in the future are applicable to embodiments of this application.

It may be understood that, in the foregoing method embodiments, methods and operations implemented by a network device (for example, the network elements) may alternatively be implemented by a component (for example, a chip or a circuit) that can be used in the network device.

The foregoing describes in detail the information obtaining method provided in embodiments of this application with reference to FIG. 3A and FIG. 3B to FIG. 11. The foregoing information obtaining method is mainly described from a perspective of interaction between the network elements. It may be understood that, to implement the foregoing functions, each network element includes corresponding hardware structures and/or software modules for performing the functions.

A person skilled in the art should be able to be aware that, with reference to units and algorithm steps in the examples described in embodiments disclosed in this specification, this application can be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

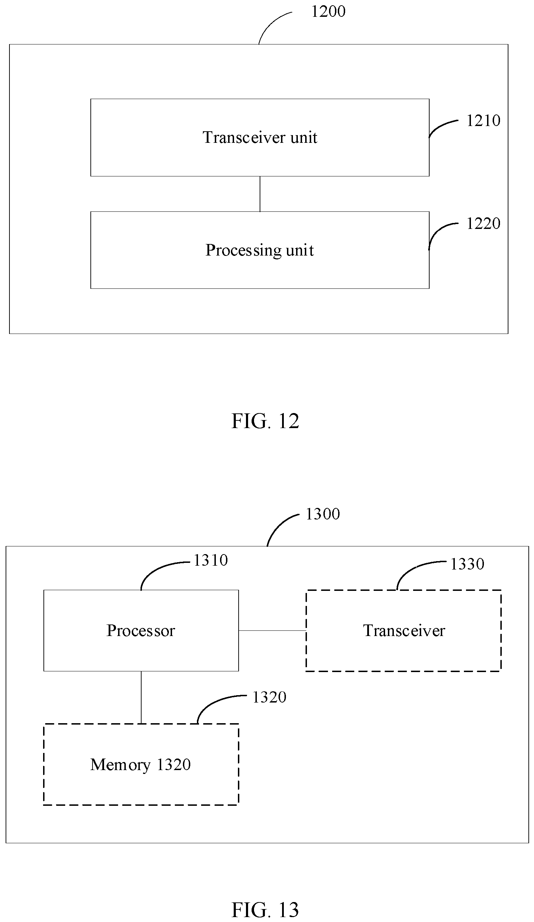

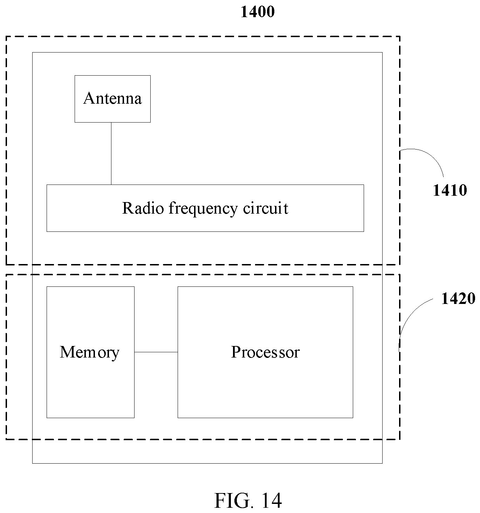

The following describes in detail a communication apparatus provided in embodiments of this application with reference to FIG. 12 and FIG. 14. It should be understood that descriptions of apparatus embodiments correspond to the descriptions of the method embodiments. Therefore, for content that is not described in detail, refer to the foregoing method embodiments. For brevity, some content is not described again.

In embodiments of this application, a transmitting end device or a receiving end device may be divided into functional modules based on the foregoing method examples. For example, each functional module may be obtained through division based on each corresponding function, or two or more functions may be integrated into one processing module. The integrated module may be implemented in a form of hardware, or may be implemented in a form of a software functional module. It should be noted that, in embodiments of this application, division into the modules is an example and is merely logical function division. During actual implementation, another division manner may be used. An example in which each functional module is obtained through division based on each corresponding function is used below for description.

FIG. 12 is a schematic block diagram of an apparatus 1200 according to an embodiment of this application. The apparatus 1200 includes a transceiver unit 1210 and a processing unit 1220. The transceiver unit 1210 may implement a corresponding communication function, and the processing unit 1220 is configured to process data. The transceiver unit 1210 may also be referred to as a communication interface or a communication unit.

Optionally, the apparatus 1200 may further include a storage unit. The storage unit may be configured to store instructions and/or data. The processing unit 1220 may read the instructions and/or data in the storage unit, to enable the apparatus to implement the foregoing method embodiments.

The apparatus 1200 may be configured to execute an action executed by the network device (for example, the network elements) in the foregoing method embodiments. In this case, the apparatus 1200 may be a network device or a component that can be configured in a network device. The transceiver unit 1210 is configured to execute receiving-related and sending-related operations on a network device side in the foregoing method embodiments. The processing unit 1220 is configured to execute processing-related operations on the network device side in the foregoing method embodiments.

In a design, the apparatus 1200 is configured to execute an action executed by the access network device in the foregoing method embodiments.

In a possible implementation, the transceiver unit 1210 is configured to receive a first request message, where the first request message is used to request to execute a first operation on target terminals, and the first request message includes identification information of the target terminals and indication information of the first operation; and the processing unit 1220 is configured to send a first query request to the target terminals based on the first request message, where the first query request is used to obtain the identification information of the target terminals. The transceiver unit 1210 is further configured to receive first identification information from a first target terminal, where the first target terminal is one of the target terminals. The transceiver unit 1210 is further configured to send an operation request message to the first target terminal, where the operation request message is used to request the first target terminal to execute the first operation. The transceiver unit 1210 is further configured to receive a first execution result from the first target terminal, where the first execution result is an execution result of executing the first operation.

Optionally, the transceiver unit 1210 is further configured to send a first message to a mobility management function network element, where the first message includes the first identification information and the first execution result. Alternatively, the transceiver unit 1210 is further configured to receive an address of a first receiving network element, where the address is an address used by the first receiving network element to receive information; and the transceiver unit 1210 is further configured to send a first message to the first receiving network element based on the address, where the first message includes the first identification information and the first execution result. Alternatively, the transceiver unit 1210 is further configured to receive first tunnel information, where the first tunnel information is used to indicate a user plane port used by a second receiving network element to receive information; and the transceiver unit 1210 is further configured to send a first message to the second receiving network element based on the first tunnel information, where the first message includes the first identification information and the first execution result.

Optionally, the transceiver unit 1210 is further configured to send a second query request to the target terminals, where the second query request is used to obtain the identification information of the target terminals; the transceiver unit 1210 is further configured to receive second identification information from a second target terminal, where the second target terminal is one of the target terminals other than the first target terminal; the transceiver unit 1210 is further configured to send the operation request message to the first target terminal; and the transceiver unit 1210 is further configured to receive a second execution result from the second target terminal, where the second execution result is an execution result of executing the first operation.

Optionally, the transceiver unit 1210 is further configured to send a second message to the mobility management function network element, where the second message includes the first identification information, the first execution result, the second identification information, and the second execution result. Alternatively, the transceiver unit 1210 is further configured to receive the address of the first receiving network element, where the address is an address used by the first receiving network element to receive information; and the transceiver unit 1210 is further configured to send a second message to the first receiving network element based on the address, where the second message includes the first identification information, the first execution result, the second identification information, and the second execution result. Alternatively, the transceiver unit 1210 is further configured to receive first tunnel information, where the first tunnel information indicates a user plane port used by the second receiving network element to receive information; and the transceiver unit 1210 is further configured to send a second message to the second receiving network element based on the first tunnel information, where the second message includes the first identification information, the first execution result, the second identification information, and the second execution result.

Optionally, the transceiver unit 1210 is further configured to send a second request message to the mobility management function network element, where the second request message is used to request to obtain the first tunnel information.

Optionally, the transceiver unit 1210 is further configured to receive a first association identifier, where the first association identifier is used to associate the first request message with the first message or is used to associate the first request message with the second message, and the first message and/or the second message include/includes the first association identifier.

Optionally, when the first request message includes operation interval duration indication information, after one operation executed by the processing unit 1220 on the target terminals ends, the processing unit 1220 is configured to execute another operation on the target terminals, where an interval between a start moment of the another operation and an end moment of the operation is the duration.

Optionally, the transceiver unit 1210 is further configured to send first information, where the first information indicates that the operation executed on the target terminals ends.

The apparatus 1200 may implement the steps or procedures performed by the access network device in the method embodiments according to embodiments of this application. The apparatus 1200 may include units configured to perform the methods performed by the access network device in the method embodiments. In addition, the units in the apparatus 1200 and the foregoing other operations and/or functions are separately used to implement corresponding procedures in the method embodiments of the access network device in the method embodiments.

When the apparatus 1200 is configured to perform the method in FIG. 3A and FIG. 3B, the transceiver unit 1210 may be configured to perform receiving and sending steps in the method, for example, steps S310, S320, S330, S340, S350, S351, S352, S353, S354, S355, S356, S360, S370, S380, S390, S391, S392, S396, S394, S395 and S311.

When the apparatus 1200 is configured to perform the method in FIG. 4A and FIG. 4B, the transceiver unit 1210 may be configured to perform receiving and sending steps in the method, for example, steps S414, S415, S416, S420, S430, S440, S450, S451, S460, S470, S480, S490, S491 and S494; and the storage unit may be configured to perform a storage step in the method, for example, step S415.

When the apparatus 1200 is configured to perform the method in FIG. 6A and FIG. 6B, the transceiver unit 1210 may be configured to perform receiving and sending steps in the method, for example, steps S614, S616, S620, S630, S631, S640, S650, S651, S660, S670, S680, S690, S691 and S693; and the storage unit may be configured to perform a storage step in the method, for example, step S615.

When the apparatus 1200 is configured to perform the method in FIG. 7A and FIG. 7B, the transceiver unit 1210 may be configured to perform receiving and sending steps in the method, for example, steps S714, S715, S720, S730, S740, S7191, S750, S751, S760, S770, S780, S790, S791 and S793.

When the apparatus 1200 is configured to perform the method in FIG. 9A and FIG. 9B, the transceiver unit 1210 may be configured to perform receiving and sending steps in the method, for example, steps S916, S917, S920, S930, S940, S950, S951, S960, S970, S980, S990, S991 and S993.

When the apparatus 1200 is configured to perform the method in FIG. 10A and FIG. 10B, the transceiver unit 1210 may be configured to perform receiving and sending steps in the method, for example, steps S1017, S1020, S1030, S1040, S1050, S1051, S1060, S1070, S1080, S1090, S1091 and S1094.

It should be understood that a specific process in which the units perform the foregoing corresponding steps is described in detail in the foregoing method embodiments. For brevity, details are not described herein again.

In another design, the apparatus 1200 is configured to execute an action executed by the terminal management control plane function network element in the foregoing method embodiments.

In a possible implementation, the transceiver unit 1210 is configured to receive a third request message from an application function network element of an application, where the third request message is used to request to execute a first operation on target terminals, and the third request message includes information about the application, identification information of the target terminals, and indication information of the first operation. The transceiver unit 1210 is configured to send a first request message to an access network device, where the first request message is used to request to execute the first operation on the target terminals, and the first request message includes the identification information of the target terminals and the indication information of the first operation.

Optionally, the processing unit 1220 is configured to determine a terminal management user plane function network element based on the information about the application; the transceiver unit 1210 is configured to send a fourth request message to the terminal management user plane function network element, where the fourth request message is used to request to obtain first tunnel information, and the first tunnel information indicates first tunnel information used by the terminal management user plane function network element to receive data; and the transceiver unit 1210 is configured to receive the first tunnel information from the terminal management user plane function network element.

Optionally, the processing unit 1220 is configured to determine a terminal management user plane function network element based on the information about the application; the processing unit 1220 is configured to determine first tunnel information, where the first tunnel information indicates first tunnel information used by the terminal management user plane function network element to receive data; and the transceiver unit 1210 is configured to send the first tunnel information to the terminal management user plane function network element.

Optionally, the processing unit 1220 is configured to determine second tunnel information based on the information about the application, where the second tunnel information is a user plane port used by a server of the application to receive data.

Optionally, the transceiver unit 1210 is configured to send the second tunnel information to the terminal management user plane function network element.

Optionally, the transceiver unit 1210 is configured to receive a first message from the access network device, where the first message includes first identification information of a first target terminal of the target terminals and a first execution result corresponding to the first target terminal; and
the transceiver unit 1210 is configured to send the first message to the terminal management user plane function network element. Alternatively, the transceiver unit 1210 is configured to receive a second message from the access network device, where the second message includes first identification information of a first target terminal of the target terminals, a first execution result corresponding to the first target terminal, second identification information of a second target terminal, and a second execution result corresponding to the second target terminal; and the transceiver unit 1210 is configured to send the second message to the terminal management user plane function network element.

Optionally, the transceiver unit 1210 is configured to receive first information from the access network device, where the first information indicates that one operation executed on the target terminals ends; and
the processing unit 1220 is configured to trigger, based on the first information, release of the first tunnel information.

The apparatus 1200 may implement the steps or procedures performed by the terminal management control plane function network element in the method embodiments according to embodiments of this application. The apparatus 1200 may include units configured to perform the method performed by the terminal management control plane function network element in the method embodiments. In addition, the units in the apparatus 1200 and the foregoing other operations and/or functions are separately used to implement corresponding procedures in the method embodiments of the terminal management control plane function network element in the method embodiments.

When the apparatus 1200 is configured to perform the method in FIG. 9A and FIG. 9B, the transceiver unit 1210 may be configured to perform receiving and sending steps in the method, for example, steps S913, S914, S915, S918, and S919; and the processing unit 1220 may be configured to perform a processing step in the method, for example, step S912.

When the apparatus 1200 is configured to perform the method in FIG. 10A and FIG. 10B, the transceiver unit 1210 may be configured to perform receiving and sending steps in the method, for example, steps S1013, S1014, S1016, S1051, S1052, S1091 and S1092; and the processing unit 1220 may be configured to perform a processing step in the method, for example, step S1012.

It should be understood that a specific process in which the units perform the foregoing corresponding steps is described in detail in the foregoing method embodiments. For brevity, details are not described herein again.

The processing unit 1220 in the foregoing embodiment may be implemented by at least one processor or a processor-related circuit. The transceiver unit 1210 may be implemented by a transceiver or a transceiver-related circuit. The storage unit may be implemented by at least one memory.

As shown in FIG. 13, an embodiment of this application further provides an apparatus 1300. The apparatus 1300 includes a processor 1310, and may further include one or more memories 1320. The processor 1310 is coupled to the memory 1320. The memory 1320 is configured to store a computer program or instructions and/or data. The processor 1310 is configured to execute the computer program or the instructions and/or the data stored in the memory 1320, so that the methods in the foregoing method embodiments are performed. Optionally, the apparatus 1300 includes one or more processors 1310.

Optionally, the memory 1320 and the processor 1310 may be integrated, or disposed separately.

Optionally, as shown in FIG. 13, the apparatus 1300 may further include a transceiver 1330. The transceiver 1330 is configured to receive and/or send a signal. For example, the processor 1310 is configured to control the transceiver 1330 to receive and/or send a signal.

In a solution, the apparatus 1300 is configured to implement operations executed by the network device (for example, the foregoing network elements) in the foregoing method embodiments.

An embodiment of this application further provides an apparatus 1400. The apparatus 1400 may be a network device or a chip. The apparatus 1400 may be configured to execute an operation executed by the access network device in the foregoing method embodiments.

FIG. 14 is a simplified schematic diagram of a structure. The apparatus 1400 may include a part 1410 and a part 1420. The part 1410 is mainly configured to: receive and send a radio frequency signal, and perform conversion between the radio frequency signal and a baseband signal. The part 1420 is mainly configured to: perform baseband processing, control a base station, and the like. The part 1410 may usually be referred to as a transceiver unit, a transceiver machine, a transceiver circuit, a transceiver, or the like. The part 1420 is usually a control center of the base station, may usually be referred to as a processing unit, and is configured to control the base station to execute processing operations on a receiving end device side in the foregoing method embodiments.

The transceiver unit in the part 1410 may also be referred to as a transceiver machine, a transceiver, or the like. The transceiver unit includes an antenna and a radio frequency circuit. The radio frequency circuit is mainly configured to perform radio frequency processing. Optionally, a device configured to implement a receiving function in the part 1410 may be considered as a receiving unit, and a device configured to implement a sending function in the part 1410 may be considered as a sending unit. That is, the part 1410 includes the receiving unit and the sending unit. The receiving unit may also be referred to as a receiving machine, a receiver, a receiving circuit, or the like. The sending unit may be referred to as a transmitter machine, a transmitter, a transmitter circuit, or the like.

The part 1420 may include one or more boards, and each board may include one or more processors and one or more memories. The processor is configured to read and execute a program in the memory, to implement a baseband processing function and control a base station. If there are a plurality of boards, the boards may be interconnected with each other to enhance a processing capability. In an optional implementation, a plurality of boards may share one or more processors, a plurality of boards may share one or more memories, or a plurality of boards may simultaneously share one or more processors.

It should be understood that FIG. 14 is merely an example rather than a limitation. The network device including the transceiver unit and the processing unit may not depend on the structure shown in FIG. 14.

When the apparatus 1400 is a chip, the chip includes a transceiver unit and a processing unit. The transceiver unit may be an input/output circuit or a communication interface. The processing unit is a processor, a microprocessor, or an integrated circuit integrated on the chip. Certainly, the apparatus 1400 may alternatively be a chip system or a processing system, so that a device in which the apparatus 1400 is installed can implement the methods and the functions in embodiments of this application. For example, the processing unit 1420 may be a processing circuit in the chip system or the processing system, to implement control on a device in which the chip system or the processing system is installed. The processing unit 1420 may further be coupled to a storage unit, and invoke instructions in the storage unit, so that the device can implement the methods and the functions in embodiments of this application. The transceiver unit 1410 may be an input/output circuit in the chip system or the processing system, to output information processed by the chip system, or input to-be-processed data or signaling information into the chip system for processing.

An embodiment of this application further provides a computer-readable storage medium. The computer-readable storage medium stores computer instructions used to implement the method performed by the network device (for example, the network elements) in the foregoing method embodiments.

For example, when a computer program is executed by a computer, the computer is enabled to implement the method performed by the network device in the foregoing method embodiments.

An embodiment of this application further provides a computer program product including instructions. When the instructions are executed by a computer, the computer is enabled to implement the method performed by the network device (for example, the network elements) in the foregoing method embodiments.

An embodiment of this application further provides a communication system. The communication system includes the network device (for example, the network elements) in the foregoing embodiments, for example, includes an access network device and a core network device.

For explanations and beneficial effects of related content of any one of the apparatuses provided above, refer to the corresponding method embodiment provided above. Details are not described herein again.

It should be understood that the processor mentioned in embodiments of this application may be a central processing unit (central processing unit, CPU), another general-purpose processor, a digital signal processor (digital signal processor, DSP), an application specific integrated circuit (application specific integrated circuit, ASIC), a field programmable gate array (field programmable gate array, FPGA) or another programmable logic device, a discrete gate or transistor logic device, a discrete hardware component, or the like. The general-purpose processor may be a microprocessor, or the processor may be any conventional processor, or the like.

It should be further understood that the memory mentioned in embodiments of this application may be a volatile memory and/or a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM). For example, the RAM may be used as an external cache. By way of example rather than limitation, the RAM may include the following plurality of forms: a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

It should be noted that when the processor is a general-purpose processor, a DSP, an ASIC, an FPGA or another programmable logic device, a discrete gate or transistor logic device, or a discrete hardware component, the memory (storage module) may be integrated into the processor.

It should further be noted that the memory described in this specification aims to include but is not limited to these memories and any memory of another proper type.

A person of ordinary skill in the art may be aware that, units and steps in the examples described with reference to embodiments disclosed in this specification can be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the protection scope of this application.

In the several embodiments provided in this application, it should be understood that the disclosed apparatus and method may be implemented in other manners. For example, the described apparatus embodiments are merely examples. For example, division into the units is merely logical function division and may be other division during actual implementation. For example, a plurality of units or components may be combined or integrated into another system, or some features may be ignored or not performed. In addition, the displayed or discussed mutual couplings, direct couplings, or communication connections may be implemented through some interfaces. Indirect couplings or communication connections between the apparatuses or units may be implemented in an electronic form, a mechanical form, or another form.

The units described as separate parts may or may not be physically separate, and parts displayed as units may or may not be physical units, may be located in one position, or may be distributed on a plurality of network elements. Some or all of the units may be selected based on actual requirements to implement the solutions provided in this application.

In addition, functional units in embodiments of this application may be integrated into one unit, each of the units may exist alone physically, or two or more units may be integrated into one unit.

All or some of the foregoing embodiments may be implemented by using software, hardware, firmware, or any combination thereof. When software is used to implement embodiments, all or some of the foregoing embodiments may be implemented in a form of a computer program product. The computer program product includes one or more computer instructions. When the computer program instructions are loaded and executed on a computer, all or some procedures or functions in embodiments of this application are generated. The computer may be a general-purpose computer, a dedicated computer, a computer network, or another programmable apparatus. For example, the computer may be a personal computer, a server, a network device, or the like. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid state disk (solid state disk, SSD)), or the like. For example, the foregoing usable medium may include but is not limited to any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but the protection scope of this application is not limited thereto. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, comprising:
receiving, by an access network device, a first request message, wherein the first request message is used to request to execute a first operation on target terminals, and the first request message comprises identification information of the target terminals and indication information of the first operation;
sending, by the access network device, a first query request to the target terminals based on the first request message, wherein the first query request is used to obtain the identification information of the target terminals;
receiving, by the access network device, first identification information from a first target terminal, wherein the first target terminal is one of the target terminals;
sending, by the access network device, an operation request message to the first target terminal, wherein the operation request message is used to request the first target terminal to execute the first operation; and
receiving, by the access network device, a first execution result from the first target terminal, wherein the first execution result is an execution result of executing the first operation.

2. The method according to claim 1, wherein the first request message further comprises an operation parameter corresponding to the first operation, and the operation request message further comprises the operation parameter.

3. The method according to claim 1 or 2, wherein after the receiving, by the access network device, a first execution result from the first target terminal, the method further comprises:
sending, by the access network device, a first message to a mobility management function network element, wherein the first message comprises the first identification information and the first execution result;
or
receiving, by the access network device, an address of a first receiving network element, wherein the address is an address used by the first receiving network element to receive information; and
sending, by the access network device, a first message to the first receiving network element based on the address, wherein the first message comprises the first identification information and the first execution result;
or
receiving, by the access network device, first tunnel information, wherein the first tunnel information indicates a user plane port used by a second receiving network element to receive information; and
sending, by the access network device, a first message to the second receiving network element based on the first tunnel information, wherein the first message comprises the first identification information and the first execution result.

4. The method according to any one of claims 1 to 3, wherein the method further comprises:
sending, by the access network device, a second query request to the target terminals, wherein the second query request is used to obtain the identification information of the target terminals;
receiving, by the access network device, second identification information from a second target terminal, wherein the second target terminal is one of the target terminals other than the first target terminal;
sending, by the access network device, the operation request message to the first target terminal; and
receiving, by the access network device, a second execution result from the second target terminal, wherein the second execution result is an execution result of executing the first operation.

5. The method according to claim 4, wherein after the receiving, by the access network device, a second execution result from the second target terminal, the method further comprises:
sending, by the access network device, a second message to the mobility management function network element, wherein the second message comprises the first identification information, the first execution result, the second identification information, and the second execution result;
or
receiving, by the access network device, the address of the first receiving network element, wherein the address is an address used by the first receiving network element to receive information; and
sending, by the access network device, a second message to the first receiving network element based on the address, wherein the second message comprises the first identification information, the first execution result, the second identification information, and the second execution result;
or
receiving, by the access network device, the first tunnel information, wherein the first tunnel information indicates the user plane port used by the second receiving network element to receive information; and
sending, by the access network device, a second message to the second receiving network element based on the first tunnel information, wherein the second message comprises the first identification information, the first execution result, the second identification information, and the second execution result.

6. The method according to any one of claims 3 to 5, wherein before the receiving, by the access network device, the first tunnel information, the method further comprises:
sending, by the access network device, a second request message to the mobility management function network element, wherein the second request message is used to request to obtain the first tunnel information.

7. The method according to any one of claims 3 to 6, wherein the method further comprises:
receiving, by the access network device, a first association identifier, wherein the first association identifier is used to associate the first request message with the first message or is used to associate the first request message with the second message, and
the first message and/or the second message comprise/comprises the first association identifier.

8. The method according to any one of claims 1 to 7, wherein the first request message further comprises at least one of the following information:
first indication information, operation interval duration indication information, operation start moment indication information, and operation timeout moment indication information, wherein
the first indication information indicates an area in which the access network device sends the query request to the target terminals, the operation interval duration indication information indicates duration of an interval between two adjacent operations, the operation start moment indication information indicates a start moment of the 1^{st} operation, and the operation timeout moment indication information indicates an end moment of the last operation.

9. The method according to claim 8, wherein when the first request message comprises the operation interval duration indication information, after one operation executed by the access network device on the target terminals ends, the method further comprises:
executing, by the access network device, another operation on the target terminals, wherein
an interval between a start moment of the another operation and an end moment of the operation is the duration.

10. The method according to any one of claims 1 to 9, wherein the identification information of the target terminals comprises at least one of the following information:
indication information of any one of the target terminals, a value interval to which identifiers of the target terminals belong, an identifier list of the target terminals, a group identifier of a terminal group to which the target terminals belong, identification information of a user to which the target terminals belong, or identification information of an application to which the target terminals belong.

11. The method according to any one of claims 1 to 10, wherein the first operation comprises at least one of the following operations: query a terminal identifier, read, write, kill, lock, blockwrite, blockerase, access, encrypt, or decrypt.

12. The method according to any one of claims 1 to 11, wherein the method further comprises:
sending, by the access network device, first information, wherein the first information indicates that the operation executed on the target terminals ends.

13. A communication method, comprising:
receiving, by a terminal management control plane function network element, a third request message from an application function network element of an application, wherein the third request message is used to request to execute a first operation on target terminals, and the third request message comprises information about the application, identification information of the target terminals, and indication information of the first operation; and
sending, by the terminal management control plane function network element, a first request message to an access network device, wherein the first request message is used to request to execute the first operation on the target terminals, and the first request message comprises the identification information of the target terminals and the indication information of the first operation.

14. The method according to claim 13, wherein before the sending, by the terminal management control plane function network element, a first request message to an access network device, the method further comprises:
determining, by a tag management control plane function network element, a terminal management user plane function network element based on the information about the application;
sending, by the terminal management control plane function network element, a fourth request message to the terminal management user plane function network element, wherein the fourth request message is used to request to obtain first tunnel information, and the first tunnel information indicates first tunnel information used by the terminal management user plane function network element to receive data; and
receiving, by the terminal management control plane function network element, the first tunnel information from the terminal management user plane function network element.

15. The method according to claim 13, wherein before the sending, by the terminal management control plane function network element, a first request message to an access network device, the method further comprises:
determining, by a tag management control plane function network element, a terminal management user plane function network element based on the information about the application;
determining, by the terminal management control plane function network element, first tunnel information, wherein the first tunnel information indicates first tunnel information used by the terminal management user plane function network element to receive data; and
sending, by the terminal management control plane function network element, the first tunnel information to the terminal management user plane function network element.

16. The method according to claim 14 or 15, wherein the first request message further comprises the first tunnel information.

17. The method according to any one of claims 13 to 16, wherein the first request message further comprises an address used by the terminal management control plane function network element to receive a notification message.

18. The method according to any one of claims 13 to 17, wherein
the third request message further comprises second tunnel information used by a server of the application to receive data; or
the terminal management control plane function network element determines second tunnel information based on the information about the application, wherein
the second tunnel information is a user plane port used by a server of the application to receive data.

19. The method according to claim 18, wherein the method further comprises:
sending, by the terminal management control plane function network element, the second tunnel information to the terminal management user plane function network element.

20. The method according to any one of claims 13 to 19, wherein the method further comprises:
receiving, by the terminal management control plane function network element, a first message from the access network device, wherein the first message comprises first identification information of a first target terminal of the target terminals and a first execution result corresponding to the first target terminal; and
sending, by the terminal management control plane function network element, the first message to the terminal management user plane function network element;
or
receiving, by the terminal management control plane function network element, a second message from the access network device, wherein the second message comprises first identification information of a first target terminal of the target terminals, a first execution result corresponding to the first target terminal, second identification information of a second target terminal, and a second execution result corresponding to the second target terminal; and
sending, by the terminal management control plane function network element, the second message to the terminal management user plane function network element.

21. The method according to any one of claims 13 to 20, wherein the third request message further comprises at least one of the following information:
second indication information, an operation parameter corresponding to the first operation, operation interval duration indication information, operation start moment indication information, and operation timeout moment indication information, wherein
the second indication information indicates an area in which the first operation is to be executed, the operation interval duration indication information indicates duration of an interval between two adjacent operations, the operation start moment indication information indicates a start moment of the 1^{st} operation, and the operation timeout moment indication information indicates an end moment of the last operation; and
the first request message further comprises at least one of the following information:
first indication information, the operation parameter corresponding to the first operation, the operation interval duration indication information, the operation start moment indication information, and the operation timeout moment indication information, wherein
the first indication information indicates an area in which the access network device sends a query request to the target terminals.

22. The method according to claim 21, wherein the method further comprises:
receiving, by the terminal management control plane function network element, first information from the access network device, wherein the first information indicates that one operation executed on the target terminals ends; and
triggering, by the terminal management control plane function network element, release of the first tunnel information based on the first information.

23. The method according to any one of claims 13 to 22, wherein the information about the application comprises an identifier of the application or a data network access identifier of the application.

24. A communication method, comprising:
sending, by an application function network element of an application, a third request message to a terminal management function network element, wherein the third request message is used to request to execute a first operation on target terminals, and the third request message comprises information about the application, identification information of the target terminals, and indication information of the first operation;
sending, by the terminal management function network element, a first request message to an access network device, wherein the first request message is used to request to execute the first operation on the target terminals, and the first request message comprises the identification information of the target terminals and the indication information of the first operation;
sending, by the access network device, a query request message and an operation request message to the target terminals, wherein the query request is used to obtain the identification information of the target terminals, and the operation request message is used to request the target terminals to execute the first operation;
receiving, by the access network device, identification information of one or more terminals of the target terminals and an execution result of executing the first operation by the one or more terminals of the target terminals;
sending, by the access network device, the identification information of the one or more terminals of the target terminals and the execution result of executing the first operation by the one or more terminals of the target terminals to the terminal management function network element; and
sending, by the terminal management function network element, the identification information of the one or more terminals of the target terminals and the execution result of executing the first operation by the one or more terminals of the target terminals to the application.

25. The method according to claim 24, wherein the terminal management function network element comprises a terminal management control plane function network element and a terminal management user plane function network element, and the sending, by an application function network element of an application, a third request message to a terminal management function network element comprises:
sending, by the application function network element of the application, the third request message to the terminal management control plane function network element;
the method further comprises:
determining, by the terminal management control plane function network element, the terminal management user plane function network element based on the information about the application; and
the sending, by the terminal management function network element, a first request message to an access network device comprises:
sending, by the terminal management control plane function network element, the first request message to the access network device.

26. The method according to claim 25, wherein before the sending, by the terminal management control plane function network element, the first request message to the access network device, the method further comprises:
determining, by a tag management control plane function network element, the terminal management user plane function network element based on the information about the application;
sending, by the terminal management control plane function network element, a fourth request message to the terminal management user plane function network element, wherein the fourth request message is used to request to obtain first tunnel information, and the first tunnel information indicates first tunnel information used by the terminal management user plane function network element to receive data; and
receiving, by the terminal management control plane function network element, the first tunnel information from the terminal management user plane function network element, wherein
the first request message further comprises the first tunnel information.

27. The method according to claim 26, wherein before the sending, by the terminal management control plane function network element, the first request message to the access network device, the method further comprises:
determining, by the tag management control plane function network element, the terminal management user plane function network element based on the information about the application;
determining, by the terminal management control plane function network element, the first tunnel information, wherein the first tunnel information indicates first tunnel information used by the terminal management user plane function network element to receive data; and
sending, by the terminal management control plane function network element, the first tunnel information to the terminal management user plane function network element, wherein
the first request message further comprises the first tunnel information.

28. The method according to any one of claims 24 to 27, wherein the first request message further comprises an address used by the terminal management control plane function network element to receive a notification message.

29. The method according to any one of claims 24 to 28, wherein the third request message further comprises second tunnel information used by a server of the application to receive data; or the terminal management control plane function network element determines second tunnel information based on the information about the application, wherein
the second tunnel information is a user plane port used by a server of the application to receive data.

30. The method according to claim 29, wherein the method further comprises:
sending, by the terminal management control plane function network element, the second tunnel information to the terminal management user plane function network element.

31. The method according to any one of claims 24 to 30, wherein the method further comprises:
receiving, by the terminal management control plane function network element, a first message from the access network device, wherein the first message comprises first identification information of a first target terminal of the target terminals and a first execution result corresponding to the first target terminal; and
sending, by the terminal management control plane function network element, the first message to the terminal management user plane function network element;
or
receiving, by the terminal management control plane function network element, a second message from the access network device, wherein the second message comprises first identification information of a first target terminal of the target terminals, a first execution result corresponding to the first target terminal, second identification information of a second target terminal, and a second execution result corresponding to the second target terminal; and
sending, by the terminal management control plane function network element, the second message to the terminal management user plane function network element.

32. The method according to any one of claims 24 to 31, wherein the method further comprises:
receiving, by the terminal management user plane function network element, the first message from the access network device, wherein the first message comprises the first identification information of the first target terminal of the target terminals and the first execution result corresponding to the first target terminal; or
receiving, by the terminal management user plane function network element, the second message from the access network device, wherein the second message comprises the first identification information of the first target terminal of the target terminals, the first execution result corresponding to the first target terminal, the second identification information of the second target terminal, and the second execution result corresponding to the second target terminal.

33. The method according to claim 31 or 32, wherein the method further comprises:
sending, by the terminal management user plane function network element, first data to an application server of the application based on the second tunnel information.

34. The method according to any one of claims 24 to 33, wherein the information about the application comprises an identifier of the application or a data network access identifier of the application.

35. A communication apparatus, comprising a unit or a module configured to perform the method according to any one of claims 1 to 12.

36. A communication apparatus, comprising a unit or a module configured to perform the method according to any one of claims 13 to 23.

37. A communication system, comprising a device configured to perform the method according to any one of claims 24 to 34.

38. A computer-readable storage medium, wherein the computer-readable storage medium stores computer instructions, and when the computer instructions are run on a computer, the method according to any one of claims 1 to 23 is performed.

39. A computer program product, comprising instructions, wherein when the computer instructions are run on a computer, the method according to any one of claims 1 to 23 is performed.
